(19) Europäisches Patentamt / European Patent Office / Office européen des brevets

(11) **EP 2 466 272 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
*G01D 5/38* *(2006.01)*          *G01D 5/347* *(2006.01)*

(21) Anmeldenummer: **11191913.0**

(22) Anmeldetag: **05.12.2011**

(54) **Optische Positionsmesseinrichtung**

Optical positioning device

Dispositif optique de mesure de la position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2010 DE 102010063253**

(43) Veröffentlichungstag der Anmeldung:
**20.06.2012 Patentblatt 2012/25**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**DE-A1- 3 736 704     US-A1- 2010 110 363
US-B2- 6 914 234**

EP 2 466 272 B1

**Beschreibung**

Die vorliegende Erfindung betrifft eine optische Positionsmesseinrichtung.

Bei herkömmlichen, optischen Positionsmesseinrichtungen, die zur Erzeugung phasenverschobener Abtastsignale eine sog. Polarisationskodierung nutzen, werden die beiden interferierenden Teilstrahlenbündel senkrecht zueinander polarisiert. Hierzu sind üblicherweise in der Abtasteinheit separate polarisationsoptische Bauelemente im Strahlengang der Teilstrahlenbündel angeordnet. Dabei sind die Polarisationsrichtungen beider Teilstrahlenbündel über die in den jeweiligen Strahlengängen angeordneten polarisationsoptischen Bauelemente jeweils fest vorgegeben.

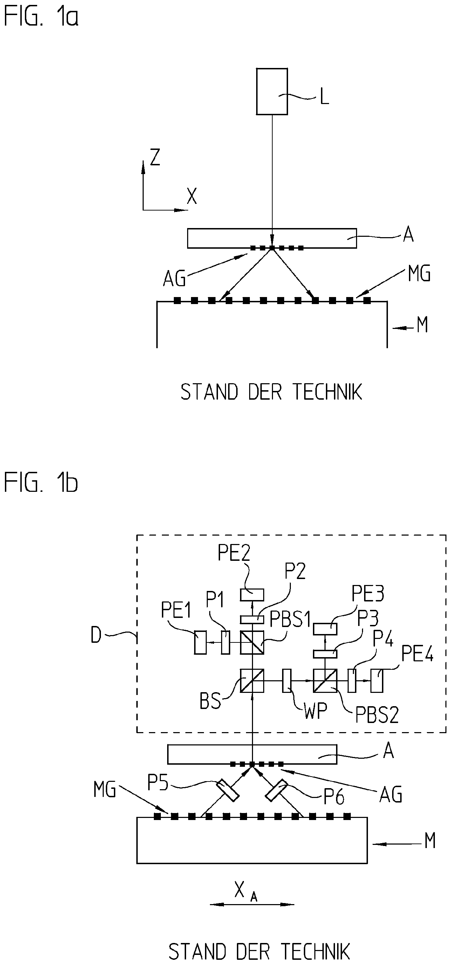

In den Figuren 1a und 1b ist der Abtaststrahlengang einer ersten Variante bekannter optischer Positionsmesseinrichtungen in verschiedenen Ansichten veranschaulicht, die mittels Polarisationskodierung phasenverschobene Abtastsignale erzeugen. Figur 1a zeigt hierbei den Abtaststrahlengang bis zum Maßstab M und Figur 1b den Abtaststrahlengang ab dem Maßstab M.

Eine Lichtquelle L, beispielsweise eine geeignete Laser-Lichtquelle, sendet ein unter 45° zur x- und y-Achse linear polarisiertes Strahlenbündel zu einer Abtastplatte A mit einem Abtastgitter AG. Die in +1. und -1. Beugungsordnung aufgespaltenen Teilstrahlenbündel propagieren in Richtung des Maßstabs M, werden durch das Maßstabgitter MG auf dem Maßstab M gebeugt und zurückreflektiert und von den Polarisatoren P5, P6 senkrecht zueinander polarisiert. Nach der Überlagerung der beiden Teilstrahlenbündel durch das Abtastgitter AG gelangt das resultierende Strahlenbündel auf eine Detektionseinheit D. Diese umfasst einen polarisationsneutralen Strahlteiler BS, eine $\lambda/4$-Verzögerungsplatte WP, die polarisierenden Strahlteiler PBS1 und PBS2, sowie die linearen Polarisatoren P1,...P4 und die zugeordneten optoelektronischen Detektorelemente PE1 - PE4. Aufgrund der in den Teilstrahlenbündeln vorgesehenen polarisationsoptischen Bauelemente detektieren die optoelektronischen Detektorelemente PE1,...PE4 unterschiedliche Polarisationszustände des auf die Detektionseinheit D treffenden resultierenden Strahlenbündels. Eine derartige Detektionseinheit für optische Positionsmesseinrichtungen ist beispielsweise aus Figur 7 der DE 2127483 A bekannt.

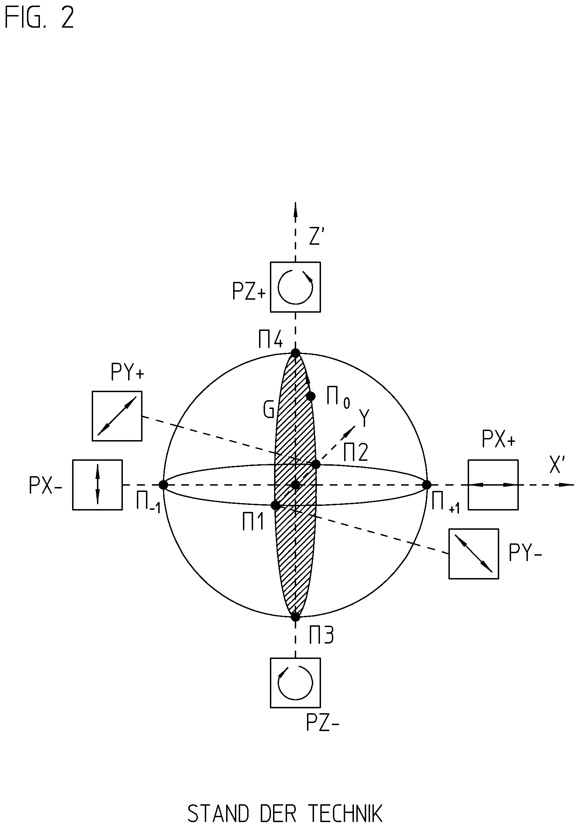

Zur weiteren Darstellung von Polarisationszuständen in optischen Positionsmesseinrichtungen wird im Folgenden die sog. Poincare-Darstellung verwendet, wie sie in Figur 2 gezeigt ist. Beliebige Polarisationszustände werden dabei als Punkt auf der Oberfläche einer Kugel in einem abstrakten Koordinatensystem X'Y'Z' dargestellt. Das abstrakte Koordinatensystem X'Y'Z' hat hierbei nichts mit dem räumlichen Koordinatensystem XYZ der jeweiligen Positionsmesseinrichtung zu tun. In der Äquatorialebene X'Y' befinden sich alle linearen Polarisationszustände. Entlang dem Äquatorialkreis dreht sich die Polarisationsachse um 180°. Die Punkte PX+ bzw. PX- stellen einen horizontalen bzw. vertikalen, linearen Polarisationszustand dar, die Punkte PY+ bzw. PY- einen um +45° bzw. -45° geneigten, linearen Polarisationszustand. Den Polen PZ+ bzw. PZ- wird ein links- bzw. rechtszirkularer Polarisationszustand zugeordnet. Alle orthogonalen Polarisationszustände befinden sich immer an diametral entgegengesetzten Stellen. Detailliertere Informationen zur Poincare-Darstellung sind z.B. in M. Born, E. Wolf: Principles of Optics, S. 32, 33, Cambridge University Press, 1999 zu finden.

In Figur 2 sind die Polarisationszustände der bekannten Positionsmesseinrichtung aus den Figuren 1a, 1b auf der Poincare-Kugel dargestellt. Die Polarisationszustände der beiden linear polarisierten Teilstrahlenbündel sind in dieser Figur durch die Bezugszeichen $\Pi_{-1}$ (-1. Beugungsordnung des Maßstabs M) und $\Pi_{+1}$ (+1. Beugungsordnung des Maßstabs M) bezeichnet. Die Überlagerung der Teilstrahlenbündel mit diesen Polarisationszuständen ergibt einen re-sultierenden Polarisationszustand $\Pi_0$, der sich je nach relativer Phasenlage der Teilstrahlenbündel entlang des Großkreises G bewegt. Die Ebene des Großkreises G steht dabei senkrecht zur Verbindungslinie der erzeugenden Polarisationszustände $\Pi_{-1}$ und $\Pi_{+1}$. Die von den optoelektronischen Detektorelementen PE1 - PE4 detektierten Polari-sationszustände $\Pi1 - \Pi4$ liegen auf dem Großkreis G, um einen maximalen Modulationsgrad der Abtastsignale zu erhalten. Sie erfassen folgende Polarisationszustände:

$$PE1: \Pi1 = PY-$$

$$PE2: \Pi2 = PY+$$

$$PE3: \Pi3 = PZ-$$

$$PE4 : \Pi4 = PZ+$$

Maximale Signalpegel der resultierenden Abtastsignale werden immer dann von einem optoelektronischen Detektorelement PEn (n=1,...4) angezeigt, wenn der resultierende Polarisationszustand $\Pi_0$ mit dem detektierten Polarisationszustand $\Pi$n des optoelektronischen Detektorelements zusammenfällt. Die Signalpegel der Abtastsignale sind entsprechend minimal, wenn der resultierende Polarisationszustand $\Pi_0$ diametral gegenüber dem detektierten Polarisationszustand $\Pi$n liegt.

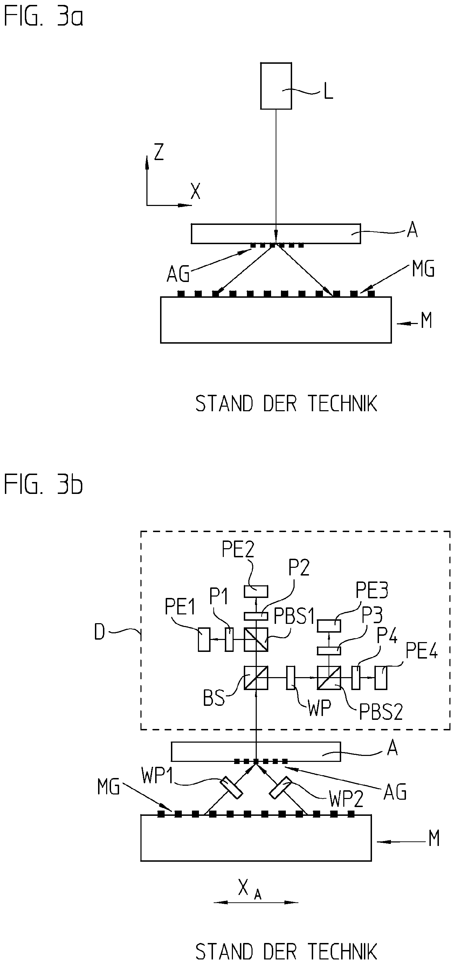

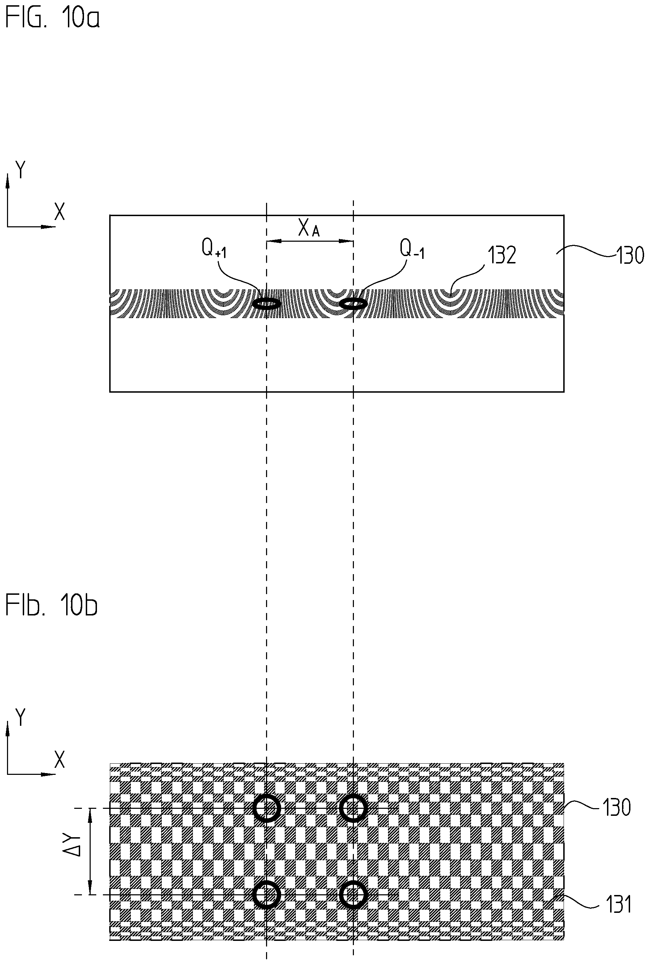

Eine zweite Variante bekannter optischer Positionsmesseinrichtungen, die polarisationskodiert phasenverschobene Abtastsignale erzeugt, ist in den Figuren 3a und 3b dargestellt. Wiederum zeigt Figur 3a den Abtaststrahlengang bis zum Maßstab M und Figur 3b den Abtaststrahlengang ab dem Maßstab M. Hier werden die beiden vom Abtastgitter AG aufgespaltenen Teilstrahlenbündel nunmehr mithilfe von $\lambda/4$-Verzögerungsplatten WP1 und WP2 links- bzw. rechtszirkularpolarisiert und damit wieder orthogonal zueinander polarisiert. Eine geeignete Detektionseinheit für diese Variante optischer Positionsmesseinrichtungen ist z.B. aus Figur 10 der DE 2127483 A bekannt.

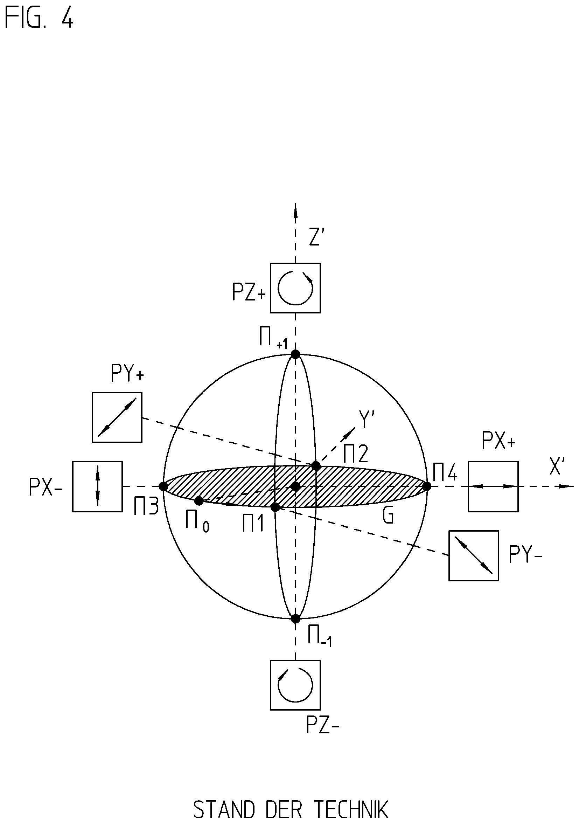

Die zugehörigen Polarisationszustände sind in Figur 4 wieder in die Poincaré-Kugel als Punkte $\Pi_{-1}$ und $\Pi_{+1}$ eingetragen. Der aus der Überlagerung resultierende Polarisationszustand $\Pi_0$ bewegt sich auch hier abhängig von der relativen Phasenlage auf einem Großkreis G. Der Großkreis G liegt jetzt in der X'Y'-Ebene, die aber wieder senkrecht zur Verbindungslinie der erzeugenden Polarisationszustände $\Pi_{-1}$ und $\Pi_{+1}$ steht. Die Detektionseinheit D enthält in dieser Variante eine $\lambda/2$-Verzögerungsplatte WP, die die einfallende lineare Polarisation $\Pi_0$ nur um 45° dreht. Ansonsten ist die Detektionseinheit D mit derjenigen aus der ersten Variante identisch. Die von den optoelektronischen Detektorelementen PE1 - PE4 erfassten Polarisationszustände $\Pi$1 - $\Pi$4 sind:

PE1: $\Pi$1 = PY-

PE2: $\Pi$2 = PY+

PE3: $\Pi$3 = PX-

PE4 : $\Pi$4 = PX+

Aus der US 6,914,234 ist ferner eine optische Positionsmesseinrichtung bekannt, dessen Maßstabgitter periodisch modulierte Polarisationseigenschaften aufweist. Innerhalb jeder Teilungsperiode des Maßstabgitters wird das auftreffende Strahlenbündel lokal linear polarisiert, wobei sich die Polarisationsrichtung über die Gitterperiode hinweg um 180° dreht; die Polarisationsperiode entspricht demzufolge der Teilungsperiode des Maßstabgitters. Die Ausdehnung des abtastenden Strahlenbündels wird so klein gewählt, dass nur ein Teil einer Teilungsperiode des Maßstabgitters beleuchtet wird, so dass das austretende Strahlenbündel eine lineare Polarisation aufweist, deren Richtung sich bei einer Verschiebung des Maßstabs dreht. Die Variation des Polarisationszustandes des austretenden Strahlenbündels entspricht damit der in Figur 4 dargestellten Situation. Die aus der US 6,914,234 beschriebene Abtastoptik ist damit äquivalent zu der bereits erläuterten Abtastoptik aus den Figuren 3a und 3b. Ein ähnliches Polarisationsgitter ist in der US2010110363 A1 offenbart. Zusammenfassend lässt sich somit feststellen, dass bei den polarisationskodierten, optischen Positionsmesseinrichtungen gemäß dem Stand der Technik feste Polarisationszustände der überlagerten Teilstrahlenbündel vorliegen, was in der Poincare-Darstellung zu einem ortsfesten Großkreis G führt. Phasenverschobene Abtastsignale (3x120°, 4x90°) werden mittels optoelektronischer Detektorelemente durch die Detektion von Polarisationszuständen erzeugt, die alle in der Ebene des Großkreises G liegen.

Für gewisse neuartige Abtastoptiken optischer Positionsmesseinrichtungen, wie sie etwa in der DE 102010063216.3 der Anmelderin vorgeschlagen werden, ergeben sich dadurch Einschränkungen. Diese Abtastoptiken zeichnen sich dadurch aus, dass nach einer bestimmten Verschiebung oder Rotation einer Komponente der optischen Positionsmesseinrichtung wie z.B. Maßstab oder Abtasteinheit etc. das zweite Teilstrahlenbündel auf dieselbe Stelle eines jeden optischen Bauteils der optischen Positionsmesseinrichtung auftrifft, auf die zuvor das erste Teilstrahlenbündel aufgetroffen ist. Solche Abtastoptiken optischer Positionsmesseinrichtungen seien im Folgenden auch als "Abtastoptiken ohne Teilstrahlenzuordnung" bezeichnet. Bei derartigen Abtastoptiken ohne Teilstrahlenzuordnung ist es nicht möglich, an einer definierten Stelle im Strahlengang der optischen Positionsmesseinrichtung polarisationsoptische Bauelemente so anzuordnen, dass stets nur das erste oder das zweite Teilstrahlenbündel beeinflusst wird.

Aufgabe der vorliegenden Erfindung ist es, eine optische Positionsmesseinrichtung, die polarisationskodiert phasenverschobene Abtastsignale erzeugt und möglichst einfach aufgebaut ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung ist zur Erfassung der Relativposition eines Maßstabs und einer Abtastplatte geeignet, die relativ zueinander entlang mindestens einer Messrichtung beweglich angeordnet sind. Ein von einer Lichtquelle emittiertes Strahlenbündel erfährt durch ein erstes Gitter eine Aufspaltung in mindestens zwei Teilstrahlenbündel, deren Polarisationszustände orthogonal zueinander orientierbar sind. Die aufgespaltenen Teilstrahlenbündel erfahren schließlich eine Wiedervereinigung zu einem resultierenden Strahlenbündel, wobei aus dem resultierenden Strahlenbündel in einer Detektionseinheit mehrere verschiebungsabhängige Abtastsignale erzeugbar sind. In den Strahlengängen der Teilstrahlenbündel sind Polarisationsmittel angeordnet, deren Polarisationswirkungen auf die darauf einfallenden Teilstrahlenbündel entlang von Bewegungsfreiheitsgraden des Maßstabs periodisch mit einer Polarisationsperiode veränderlich sind, wobei die Polarisationsperiode der Polarisationsmittel größer als die Teilungsperiode des ersten Gitters ist.

Mit Vorteil ist die Detektionseinheit dergestalt ausgebildet, dass darüber jeder beliebige Polarisationszustand des resultierenden Strahlenbündels eindeutig in den drei Raumrichtungen der Poincare-Kugel detektierbar ist.

Es ist möglich, dass die Detektionseinheit mindestens drei Detektorelemente umfasst, wobei die mindestens drei Detektorelemente zwei lineare und einen zirkularen Polarisationszustand detektieren und die beiden linearen Polarisationszustände nicht orthogonal zueinander orientiert sind.

Vorzugsweise resultieren über die Einwirkung der Polarisationsmittel auf die Teilstrahlenbündel jeweils ortsabhängig in ihrer Orientierung variierende lineare Polarisationszustände in den Teilstrahlenbündeln.

Mit Vorteil sind die Polarisationszustände der beiden Teilstrahlenbündel stets orthogonal zueinander orientiert.

In einer möglichen Ausführungsform sind die Polarisationsmittel derart ausgebildet, dass eine ortsabhängig variierende Polarisationswirkung auf die darauf einfallenden Teilstrahlenbündel über räumlich unterschiedlich orientierte Komponenten der Polarisationsmittel einstellbar ist.

Die Polarisationsmittel können als Hochfrequenzgitter ausgebildet sein, die auf die darauf einfallenden Teilstrahlenbündel lokal wie lineare Polarisatoren wirken.

Desweiteren können die Polarisationsmittel als Hochfrequenzgitter ausgebildet sein, die auf die darauf einfallenden Teilstrahlenbündel lokal wie eine Verzögerungsplatte wirken.

In einer Ausführungsform der erfindungsgemäßen optischen Positionsmesseinrichtung ist vorgesehen, dass das von der Lichtquelle emittierte Strahlenbündel an einem ersten Gitter, das als Abtastgitter auf der Abtastplatte ausgebildet ist, eine Aufspaltung in zwei Teilstrahlenbündel erfährt, die Teilstrahlenbündel anschließend ein Maßstabgitter auf dem Maßstab beaufschlagen und daraufhin wieder in Richtung des Abtastgitters propagieren, wo die Teilstrahlenbündel zu einem resultierenden Strahlenbündel wiedervereinigt und der Detektionseinheit zugeführt werden.

Hierbei kann der Maßstab als Reflexions-Maßstab ausgebildet sein, der eine strukturierte, dielektrische Schicht und einen strukturierten Reflektor aufweist, die auf einem Substrat aufgebracht sind und wobei der strukturierte Reflektor als polarisierendes Hochfrequenzgitter ausgebildet ist.

In einer weiteren Ausführungsform der erfindungsgemäßen optischen Positionsmesseinrichtung ist vorgesehen, dass

- das von der Lichtquelle emittierte Strahlenbündel an einem ersten Gitter, das als Maßstabgitter auf dem Maßstab ausgebildet ist, eine Aufspaltung in zwei Teilstrahlenbündel erfährt,
- die Teilstrahlenbündel anschließend ein Abtastgitter auf der Abtastplatte beaufschlagen und daraufhin in Richtung eines Reflektors propagieren, wo eine Rückreflexion der Teilstrahlenbündel in Richtung des Abtastgitters resultiert und
- die Teilstrahlenbündel nach dem erneuten Beaufschlagen des Abtastgitters in Richtung des Maßstabgitters propagieren, wo die Teilstrahlenbündel zu einem resultierenden Strahlenbündel wiedervereinigt und der Detektionseinheit zugeführt werden.

Hierbei kann der Reflektor als Hochfrequenzgitter ausgebildet sein, dessen lokale Gitterorientierung sich über die Polarisationsperiode kontinuierlich um 180° verdreht.

Alternativ kann der Reflektor als Hochfrequenzgitter ausgebildet sein, dessen lokale Gitterorientierung sich über die Polarisationsperiode kontinuierlich um 90° verdreht.

Vorzugsweise gilt für das Verhältnis der Polarisationsperiode der Polarisationsmittel zur Teilungsperiode des ersten Gitters

$$P_P / d_A > 100$$

oder

$$P_P / d_M > 100,$$

mit

> $P_P$ := Polarisationsperiode der Polarisationsmittel,
> $d_A$ := Teilungsperiode des Abtastgitters,
> $d_M$ := Teilungsperiode des Maßstabgitters.

Als wichtiger Vorteil einer Variante erfindungsgemäßer optischer Positionsmesseinrichtungen ist anzuführen, dass zur polarisationskodierten Erzeugung der phasenverschobenen Abtastsignale keine zusätzlichen polarisationsoptischen Bauelemente im Abtaststrahlengang zwischen dem Maßstab und der Abtastplatte nötig sind. Die erfindungsgemäß vorgesehenen Polarisationsmittel lassen sich in verschiedenen Ausführungsformen in bereits vorhandene Komponenten integrieren. Es resultiert ein besonders einfacher Aufbau der Abtastoptik.

Ferner besitzen die erfindungsgemäßen Abtastoptiken eine äußerst hohe Stabilität gegenüber Temperaturschwankungen, wenn der Maßstab und die Abtastplatte aus einem Material mit geringer thermischer Ausdehnung gefertigt werden. Es befinden sich nämlich keine weiteren optischen Bauelemente im Abtaststrahlengang zwischen der Aufspaltung in die Teilstrahlenbündel bis hin zu deren Vereinigung. Derartige Bauelemente würden durch ihr thermisches Ausdehnungsverhalten oder durch thermische Brechungsindexänderungen die Phasenverschiebung zwischen den Teilstrahlenbündeln beeinflussen und damit eine thermisch bedingte Positionsdrift in den resultierenden Abtastsignalen verursachen.

In einer weiteren Variante erfindungsgemäßer optischer Positionsmesseinrichtungen ergibt sich als Vorteil eine besonders einfache Strahlengangführung gegenüber bekannten Abtastoptiken aus dem Stand der Technik.

Aufgrund der vorzugsweise konstant orthogonalen Polarisation der Teilstrahlenbündel ist ferner ein hoher Modulationsgrad der Abtastsignale gewährleistet.

Weitere Vorteile sowie Einzelheiten der vorliegenden Erfindung ergeben sich aus der nachfolgenden Beschreibung von Ausführungsbeispielen anhand der beiliegenden Figuren.

Es zeigt hierbei

Figur 1a, 1b          den Abtaststrahlengang einer ersten Variante optischer Positionsmesseinrichtungen aus dem Stand der Technik in verschiedenen Ansichten;

Figur 2          die Poincare-Darstellung zur bekannten optischen Positionsmesseinrichtung aus den Figuren 1a, 1b;

Figur 3a, 3b          den Abtaststrahlengang einer zweiten Variante optischer Positionsmesseinrichtungen aus dem Stand der Technik in verschiedenen Ansichten;

Figur 4          die Poincare-Darstellung zur bekannten optischen Positionsmesseinrichtung aus den Figuren 3a, 3b;

Figur 5a, 5b          den Abtaststrahlengang einer ersten Ausführungsform der erfindungsgemäßen optischen Positionsmesseinrichtung in verschiedenen Ansichten;

Figur 6a, 6b          eine Schnittdarstellung des Maßstabs sowie eine Draufsicht auf den Reflektor des Maßstabs der ersten Ausführungsform der erfindungsgemäßen optischen Positionsmesseinrichtung;

Figur 7          die Poincare-Darstellung zur ersten Ausführungsform der erfindungsgemäßen optischen Positionsmesseinrichtung;

Figur 8a, 8b          den Abtaststrahlengang einer Variante der ersten Ausführungsform der erfindungsgemäßen optischen Positionsmesseinrichtung in verschiedenen Ansichten;

Figur 9a, 9b, 9c          den Abtaststrahlengang einer zweiten Ausführungsform der erfindungsgemäßen optischen Positionsmesseinrichtung in verschiedenen Ansichten;

Figur 10a, 10b          eine Draufsicht auf den Reflektor sowie auf das Maßstabgitter des Maßstabs der zweiten Ausführungsform der erfindungsgemäßen optischen Positionsmesseinrichtung;

Figur 11      eine schematisierte Darstellung der Detektionseinheit der zweiten Ausführungsform der erfindungsgemäßen optischen Positionsmesseinrichtung;

Figur 12      eine schematisierte Darstellung des Abtaststrahlengangs einer dritten Ausführungsform der erfindungsgemäßen optischen Positionsmesseinrichtung;

Figur 13a, 13b      eine Draufsicht auf das Abtastgitter sowie auf den Reflektor der dritten Ausführungsform der erfindungsgemäßen optischen Positionsmesseinrichtung.

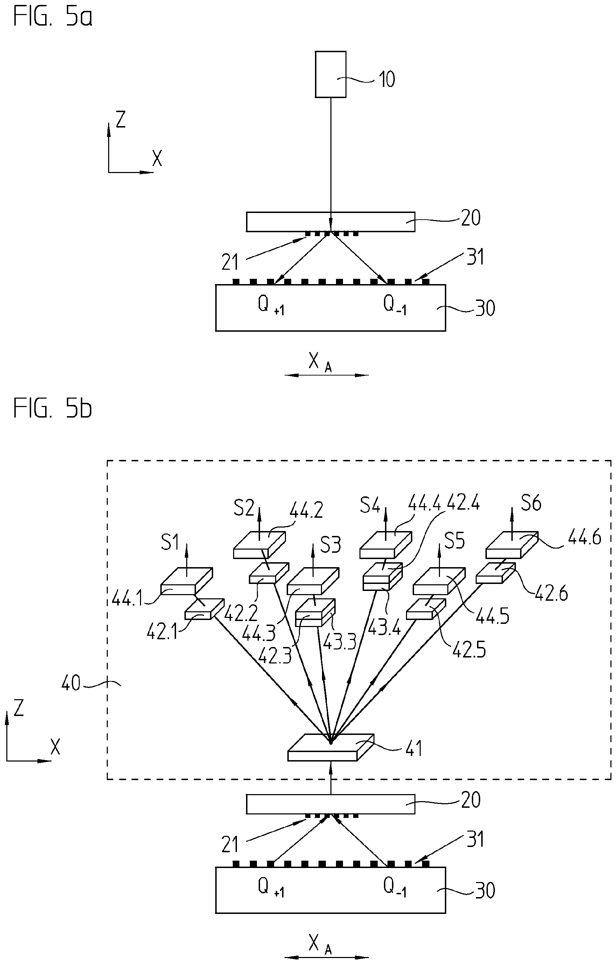

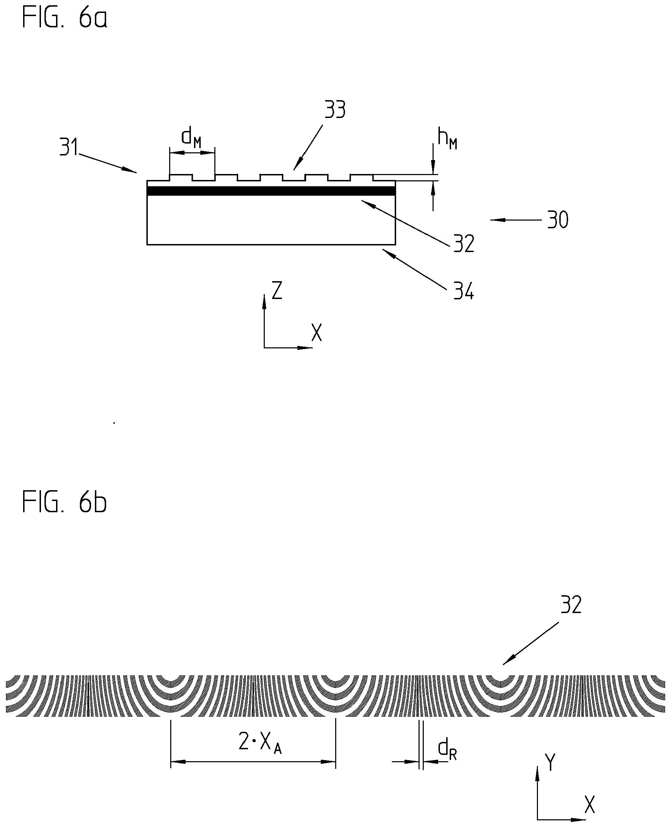

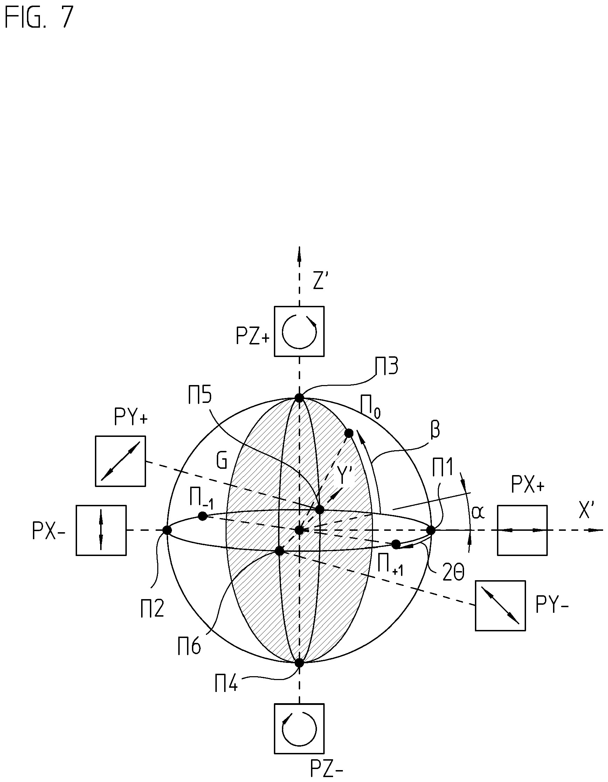

Anhand der Figuren 5a, 5b, 6a, 6b und 7 wird nachfolgend ein erstes Ausführungsbeispiel der erfindungsgemäßen optischen Positionsmesseinrichtung erläutert. Hierbei zeigen die Figuren 5a und 5b den Abtaststrahlengang einer ersten Ausführungsform der erfindungsgemäßen optischen Positionsmesseinrichtung in verschiedenen Ansichten, die Figuren 6a, 6b eine Schnittdarstellung des Maßstabs sowie eine Draufsicht auf den Reflektor des Maßstabs der ersten Ausführungsform der erfindungsgemäßen optischen Positionsmesseinrichtung und Figur 7 die Poincare-Darstellung zur ersten Ausführungsform der erfindungsgemäßen optischen Positionsmesseinrichtung.

In den Figuren 5a (Abtaststrahlengang bis zum Maßstab 30) und 5b (Strahlengang ab dem Maßstab 30) ist der Abtaststrahlengang einer erfindungsgemäßen optischen Positionsmesseinrichtung gezeigt, die als sog. Littrow-Geber ausgebildet ist. Dies bedeutet, dass ein senkrecht zur Messrichtung auf ein erstes Gitter in Form eines Abtastgitters 21 treffendes Strahlenbündel einer kollimierten Lichtquelle 10 in zwei symmetrische Teilstrahlenbündel aufgespalten wird, die zu einem Maßstabgitter 31 propagieren. Von diesem werden sie in entgegengesetzter Richtung jeweils zurückgebeugt, so dass die Teilstrahlenbündel bei einer erneuten Beugung am Abtastgitter 21 kollinear überlagert werden. In Messrichtung betrachtet stimmen dabei die Strahlneigungen der auf das Maßstabgitter 31 eintreffenden Teilstrahlenbündel mit denjenigen der gebeugten Teilstrahlenbündel überein.

Über die erfindungsgemäße optische Positionsmesseinrichtung kann die Relativposition einer Abtastplatte 20 und eines Maßstabs 30 zueinander bestimmt werden, die mindestens entlang der angegebenen Messrichtung x gegeneinander verschiebbar angeordnet sind. Es ist hierbei möglich, dass die Abtastplatte 20 zusammen mit weiteren Komponenten wie z.B. einer Lichtquelle 10 und einer Detektionseinheit 40 in einer - nicht dargestellten - Abtasteinheit angeordnet sind. Die Abtastplatte 20 bzw. die Abtasteinheit einerseits und der Maßstab 20 andererseits sind mit zwei zueinander beweglichen Objekten verbunden, deren Relativposition zu bestimmen ist, beispielsweise zwei zueinander verschiebbaren Maschinenteilen. Über die erfindungsgemäße optische Positionsmesseinrichtung werden im Fall der Relativbewegung dieser Objekte verschiebungsabhängige Abtastsignale in Form von periodischen Inkrementalsignalen erzeugt und einer Folgeelektronik zur Weiterverarbeitung zur Verfügung gestellt.

Das kollimierte und unpolarisierte Strahlenbündel der Lichtquelle 10 wird an einem ersten Gitter, ausgebildet als transmittives Abtastgitter 21 mit der Teilungsperiode $d_A$ auf der Abtastplatte 20 zunächst in Teilstrahlenbündel +1. und -1. Beugungsordnung aufgespalten. Diese Teilstrahlenbündel propagieren dann in Richtung eines Maßstabgitters 31 auf dem Maßstab 30, wo sie an den Auftrefforten $Q_{-1}$, $Q_{+1}$ mit dem Strahlabstand $X_A$ zueinander auftreffen. Das Maßstabgitter 31 erstreckt sich entlang der Messrichtung x und besitzt die Teilungsperiode $d_M = d_A/2$. Über das Maßstabgitter 31 werden die einfallenden Teilstrahlenbündel reflektiv in -1. bzw. +1. Beugungsordnung gebeugt, d.h. die gebeugten Teilstrahlenbündel laufen damit in entgegengesetzter Richtung zurück, so dass sie erneut auf das Abtastgitter 21 auf der Unterseite der Abtastplatte 20 treffen. Dort werden beide Teilstrahlenbündel durch erneute Beugung in +1. und -1. Beugungsordnung überlagert und treten in 0. resultierender Beugungsordnung als resultierendes Strahlenbündel wiedervereinigt aus. Das resultierende Strahlenbündel wird schließlich der Detektionseinheit 40 zugeführt, die verschiebungsabhängige phasenverschobene Abtastsignale S1 - S6 erzeugt.

Da beide Teilstrahlenbündel nur am Ort des Maßstabs 30 bzw. des Maßstabgitters 31 räumlich getrennt sind, weist das Maßstabgitter 31 erfindungsgemäß lokal unterschiedliche Polarisationseigenschaften für die darauf einfallenden Teilstrahlenbündel an den Auftrefforten $Q_{+1}$ und $Q_{-1}$ auf. So polarisiert das Maßstabgitter 31 im vorliegenden Ausführungsbeispiel am Ort $Q_{+1}$ in X-Richtung, während am Ort $Q_{-1}$ eine Polarisierung in Y-Richtung resultiert. Dies bedeutet, dass das am Ort $Q_{+1}$ gebeugte Teilstrahlenbündel nach der Beugung eine lineare Polarisation in X-Richtung besitzt und das das am Ort $Q_{-1}$ gebeugte Teilstrahlenbündel nach der Beugung eine lineare Polarisation in Y-Richtung besitzt. Auf diese Art und Weise werden die beiden einfallenden Teilstrahlenbündel somit orthogonal zueinander polarisiert. Wird der Maßstab 30 nun um den Strahlabstand $X_A$ ($>>d_M$) verschoben, d.h. für den Verschiebebetrag $\Delta x_M$ des Maßstabs 30 in Richtung x gilt dann $\Delta x_M = X_A$, so trifft das am Maßstabgitter 31 in +1. Beugungsordnung abgelenkte Teilstrahlenbündel am Ort $Q'_{+1} = Q_{-1}$ auf das Maßstabgitter 31, so dass es dort in Y-Richtung polarisiert wird. Damit beide Teilstrahlenbündel wieder orthogonale Polarisationen zueinander aufweisen, muss am Ort $Q'_{-1}$ das Maßstabgitter 31 in X-Richtung polarisieren. Das Maßstabgitter 31 muss daher im Strahlabstand $X_A$ jeweils abwechselnd in X- und Y-Richtung polarisieren. Damit auch an den dazwischenliegenden Orten die oben genannte Bedingung bzgl. der Orthogonalität der Polarisationsrichtung der gebeugten Teilstrahlenbündel erfüllt wird, weist das Maßstabgitter 31 somit eine vom Ort x periodisch abhängige Polarisationsrichtung $\Theta(x)$ auf:

$$\theta(x) = \frac{\pi}{2} \cdot \frac{x}{X_A} \qquad \text{(Gl. 1)}$$

Die Polarisationsrichtungen der beiden am Maßstabgitter 31 gebeugten Teilstrahlenbündel stehen damit immer zueinander senkrecht:

$$\theta(x + X_A) = \theta(x) + \frac{\pi}{2} \qquad \text{(Gl. 2)}$$

Die zueinander stets senkrechte Orientierung der Polarisationsrichtungen in den aufgespaltenen Teilstrahlenbündeln wird demzufolge nicht wie im Stand der Technik durch separate polarisationsoptische Bauelemente im Strahlengang zwischen Abtastplatte 20 und Maßstab 30 bewirkt, die in den Teilstrahlenbündeln eine jeweils gleichbleibende Polarisation einstellen. Vielmehr werden erfindungsgemäß über geeignet ausgebildete Polarisationsmittel Polarisationszustände in den aufgespaltenen Teilstrahlenbündeln eingestellt, die entlang von Bewegungsfreiheitsgraden des Maßstabs veränderlich sind, vorzugsweise periodisch mit einer bestimmten Polarisationsperiode $P_P$ der jeweiligen Polarisationsmittel. Stets ist hierbei gewährleistet, dass beide Teilstrahlenbündel eine orthogonale Polarisation zueinander aufweisen, d.h. dass die Polarisationszustände der beiden Teilstrahlenbündel stets orthogonal zueinander orientiert sind. Im vorliegenden ersten Ausführungsbeispiel fungieren bestimmte Elemente eines geeignet ausgebildeten Maßstabgitters 31 bzw. eines geeignet ausgebildeten Maßstabs 30 als Polarisationsmittel, welche diese Funktion übernehmen.

Ein Ausführungsbeispiel eines hierzu geeigneten Maßstabs 30 mit einem entsprechenden Maßstabgitter 31 ist in Figur 6a (Querschnitt) und Figur 6b (Draufsicht auf Reflektor 32) gezeigt. Der Maßstab 30 besteht aus einem Substrat 34, auf dem ein Maßstabgitter 31, bestehend aus einer strukturierten, dielektrischen Schicht 33 und einem strukturierten Reflektor 32 aufgebracht sind; man spricht in diesem Fall von einem sog. Reflexions-Maßstab. Die dielektrische Schicht 33 ist stufenförmig mit der Periodizität bzw. Teilungsperiode $d_M$ strukturiert. Die Steghöhe $h_M$ der dielektrischen Schicht 33 ist so dimensioniert, dass eine optische Phasenverschiebung von 180° zwischen der am Steg und der an der Lücke austretenden Welle entsteht. Die Stege und Lücken der dielektrischen Schicht 33 sind näherungsweise gleich breit. Der Reflektor 32 besteht aus einer metallischen Schicht, beispielsweise Aluminium, Silber oder Gold, die lokal mit einer Gitterkonstanten $d_R < \lambda/2$ strukturiert ist, wobei $\lambda$ die Wellenlänge der Lichtquelle 10 angibt. Der Reflektor 32 ist in diesem Ausführungsbeispiel damit als polarisierendes Hochfrequenzgitter ausgebildet. Ein derartiges Hochfrequenzgitter besitzt nur eine 0. Beugungsordnung und wirkt wie ein Polarisator auf die darauf einfallenden Teilstrahlenbündel, wobei die Polarisationsrichtung des davon reflektierten Teilstrahlenbündels mit der Linienrichtung des Hochfrequenzgitters am Auftreffort übereinstimmt. Das Hochfrequenzgitter fungiert in dieser Ausführungsform demzufolge als erfindungsgemäß vorgesehenes Polarisationsmittel. Die Gitterorientierung des Hochfrequenzgitters verändert sich periodisch entlang der Messrichtung x bzw. entlang der Maßstab-Erstreckungsrichtung zumindest näherungsweise entsprechend der obigen Gleichung 1. In einer Distanz von $2 \cdot X_A$ stimmen die Gitterorientierungen dabei jeweils wieder überein. Die Distanz $2 \cdot X_A$ wird im folgenden als Polarisationsperiode $P_P$ bezeichnet. Die maßstabseitige Kombination aus der strukturierten, dielektrischen Schicht 33 und dem strukturierten Reflektor 32, die letztlich das Maßstabgitter 31 verkörpert, wirkt somit wie ein Phasengitter mit unterdrückter 0. Beugungsordnung, wobei die +/-1. Beugungsordnungen ortsabhängig unterschiedlich polarisiert werden. Über die Einwirkung der Polarisationsmittel - respektive des Hochfrequenzgitters im vorliegenden Ausführungsbeispiel - auf die Teilstrahlenbündel resultieren somit jeweils ortsabhängig in ihrer Orientierung variierende lineare Polarisationszustände in den Teilstrahlenbündeln. Das Hochfrequenzgitter wirkt auf die einfallenden Teilstrahlenbündel hier also lokal jeweils wie ein linearer Polarisator.

Im Gegensatz zu den aus der eingangs erwähnten US 6,914,234 bekannten polarisierenden Maßstabgittern stimmt in der vorliegenden Erfindung die Teilungsperiode $d_M$ des Maßstabgitters bzw. die Teilungsperiode $d_A$ des ersten Gitters, d.h. des Abtastgitters 21, nicht mit der Polarisationsperiode $P_P = 2 \cdot X_A$ überein, sondern es gilt $d_M \ll 2 \cdot X_A$ bzw. $d_A \ll 2 \cdot X_A$ Typische Werte für die Teilungsperiode $d_M$ und die Polarisationsperiode $P_P = 2 \cdot X_A$ betragen etwa $d_M = 1 \dots 10 \ \mu m$ und $2 \cdot X_A = 0.5 \dots 5$ mm; $d_A$ würde gemäß der oben angegebenen Beziehung dann etwa im Bereich $d_A = 2 \dots 20 \ \mu m$ liegen. Für das Verhältnis der Polarisationsperiode $P_P$ zur Teilungsperiode des ersten Gitters - im vorliegenden Beispiel des Abtastgitters 21 - gilt demzufolge $P_P / d_A > 100$. Fungiert wie in einem nachfolgend noch zu beschreibenden Ausführungsbeispiel das Maßstabgitter mit der Teilungsperiode $d_M$ als erstes Gitter mit Aufspaltfunktion, so gilt analog $P_P / d_M > 100$. Die Polarisationsperiode $P_P$ der Polarisationsmittel ist somit erfindungsgemäß stets größer als die Teilungsperiode des jeweiligen ersten Gitters. Erst durch eine derartige Wahl des Verhältnisses zwischen der Polarisationsperiode $P_P$ der Polarisationsmittel und der Teilungsperiode des ersten Gitters ist es möglich, eine sehr hoch auflösende optische Positionsmesseinrichtung auszubilden, da die Ausdehnung der Strahlenbündel nicht mehr kleiner als Teilungsperiode $d_M$ des Maßstabgitters 31 gewählt werden muss, sondern nur mehr kleiner als die Polarisationsperiode $P_P = 2 \cdot X_A$.

Die Polarisationszustände $\Pi_{-1}$ bzw. $\Pi_{+1}$ der beiden Teilstrahlenbündel lassen sich auch für das erste Ausführungsbeispiel der erfindungsgemäßen optischen Positionsmesseinrichtung anschaulich als Punkte auf der Poincare-Kugel darstellen, wie dies in Figur 7 ersichtlich ist. Diese Polarisationszustände sind aufgrund der oben beschriebenen Reflektorstruktur stets lineare und orthogonale Polarisationszustände und werden damit diametral gegenüber liegend in der X'Y'-Ebene (Äquatorebene) dargestellt. Sie bewegen sich abhängig von der Maßstabverschiebung $\Delta x_M$ entlang dem Äquatorkreis. Der Winkel zwischen dem Polarisationszustand $\Pi_{+1}$ und der X'-Achse beträgt $2\Theta(\Delta x_M)$. Beide Polarisationszustände $\Pi_{-1}$ und $\Pi_{+1}$ durchlaufen den vollständigen Äquatorkreis bei einer Maßstabverschiebung von $\Delta x_M = 2 \cdot X_A$, d.h. nach einer Verschiebung um Polarisationsperiode $2 \cdot X_A$ des Maßstabgitters 31 liegt wieder der gleiche Polarisationszustand vor.

Bei einer Maßstabverschiebung um den Verschiebebetrag $\Delta x_M$ erfahren die beiden Teilstrahlenbündel durch die lokal unterschiedliche Beugung am Maßstabsgitter 31 eine Phasenverschiebung zueinander. Für die hier vorliegende Beugung in +1. und -1. Beugungsordnung beträgt die resultierende Phasenverschiebung

$$\Delta\phi(\Delta x_M) = 2 \cdot \frac{2\pi}{d_M} \cdot \Delta x_M = \frac{2\pi}{SP} \cdot \Delta x_M \qquad \text{(Gl. 3)}$$

Hierbei bezeichnet die Größe $SP = d_M/2$ die Signalperiode der erfindungsgemäßen optischen Positionsmesseinrichtung.

Die Überlagerung der beiden Teilstrahlenbündel zum resultierenden, in 0. Beugungsordnung austretenden Strahlenbündel liefert einen Polarisationszustand $\Pi_0$ mit den Winkellagen $\alpha, \beta$ bzgl. des Mittelpunkts der Poincare-Kugel in den angegebenen Ebenen. Der Polarisationszustand $\Pi_0$ bzw. der entsprechende Punkt liegt auf der Poincare-Kugel auf einem Großkreis G, der senkrecht zur Verbindungslinie der erzeugenden Polarisationszustände $\Pi_{-1}$ und $\Pi_{+1}$ der beiden Teilstrahlenbündel steht. Die Winkellage $\alpha$ des Großkreises G ist daher gegeben durch

$$\alpha = 2 \cdot \theta(\Delta x_M) - \frac{\pi}{2} = \pi \cdot \frac{\Delta x_M}{X_A} - \frac{\pi}{2} \qquad \text{(Gl. 4)}$$

Die Winkellage $\beta$ des Punktes $\Pi_0$ innerhalb des Großkreises G wird durch die Phasenverschiebung $\Delta\Phi(\Delta X_M)$ folgendermaßen bestimmt:

$$\beta = \Delta\Phi(\Delta x_M) \qquad \text{(Gl. 5)}$$

Bei einer Phasenänderung $\Delta\Phi = 2\pi$ durchläuft der Polarisationszustand $\Pi_0$ bzw. der entsprechende Punkt genau einmal den Großkreis G.

Bei einer kontinuierlichen Bewegung des Maßstabs 30 ändern sich sowohl die Winkellage $\alpha$ des Großkreises G als auch die Winkellage $\beta$ entlang des Großkreises G. Allerdings erfolgt die Änderung der Winkellage $\beta$ sehr viel schneller als die der Winkellage $\alpha$, da die Signalperiode SP sehr viel kleiner als die Polarisationsperiode $P_P = 2 \cdot X_A$ des Maßstabgitters 31 ist. Typische Werte für die Signalperiode SP und die Polarisationsperiode $P_P = 2 \cdot X_A$ d betragen SP $= 0.5 \ldots 5\mu m$ und $2 \cdot X_A \sim 0.5 \ldots 5$ mm. Bei einer kontinuierlichen Bewegung des Maßstabs 30 bewegt sich daher der Polarisationszustand $\Pi_0$ schnell entlang des Großkreises G, wobei dieser Großkreis G langsam um die vertikale Achse Z' (Verbindungslinie der zirkularen Polarisationszustände) rotiert. Der Großkreis G wird daher auch als lokale Polarisationszustandsebene bezeichnet.

Die Detektionseinheit 40 und die nachfolgende Signalauswertung sind nunmehr so aufgebaut, dass die Winkellage $\beta$ mit einer hohen Auflösung $\delta\beta$ bestimmt werden kann. Dies gewährleistet eine hohe Positionsauflösung

$\delta\xi = SP \cdot \frac{\delta\beta}{2\pi}$ der erfindungsgemäßen optischen Positionsmesseinrichtung (Feinposition). In einigen Fällen kann es aber auch vorteilhaft sein, gleichzeitig die Winkellage $\alpha$ zu bestimmen. Diese liefert eine Information zu einer Grobposition, wobei die Grobposition innerhalb der Polarisationsperiode $2 \cdot X_A$ absolut ist. Wie bei absoluten Positionsmesseinrichtungen nach dem Mehrfrequenzverfahren bekannt ist, kann eine solche Grobposition zu einer Verrechnung mit der Feinposition herangezogen werden, um einen hochaufgelösten und innerhalb von $2 \cdot X_A$ eindeutigen Positionswert zu erzeugen. Gegebenenfalls können auch noch zusätzliche Gitterspuren auf dem Maßstab 30 aufgebracht und abgetastet werden, um die Sicherheit der Verrechnung zu erhöhen und/oder den Eindeutigkeitsbereich der Positionsbestimmung zu erweitern. Auf diese Art und Weise kann eine absolute Positionsbestimmung erfolgen.

Ein Ausführungsbeispiel einer Detektionseinheit 40 für die erfindungsgemäße optische Positionsmesseinrichtung ist in Figur 5b dargestellt. Ein darin eingangsseitig angeordnetes Aufspaltgitter 41 spaltet das einfallende resultierende Strahlenbündel in 6 Detektionsstrahlenbündel auf. Diese treffen auf die Polarisatoren 42.1 - 42.6, bevor sie durch entsprechende optoelektronische Detektorelemente 44.1 - 44.6 in die verschiebungsabhängigen Abtastsignale S1 - S6 umgewandelt werden. Den Polarisatoren 42.3 und 42.4 sind $\lambda/4$-Verzögerungsplatten 43.3 bzw. 43.4 vorgeordnet, um links- bzw. rechtszirkulare Polarisationen der darauf einfallenden Detektionsstrahlenbündel in lineare Polarisationen überzuführen. Die Polarisationsachsen der Polarisatoren 42.1, 42.2, 42.5 und 42.6 stehen hierbei in einem Winkel von 0°, 90°, 45° bzw. 135° zur x-Richtung. Die durch die optoelektronischen Detektorelemente 44.1 - 44.6 erfassten Polarisationszustände $\Pi 1, \Pi 2...\Pi 6$ sind in der Poincare-Darstellung der Figur 7 bezeichnet als:

$$44.1: \Pi 1 = PX+$$

$$44.2: \Pi 2 = PX-$$

$$44.3: \Pi 3 = PZ+$$

$$44.4: \Pi 4 = PZ-$$

$$44.5: \Pi 5 = PY+$$

$$44.6: \Pi 6 = PY-$$

Die optoelektronischen Detektorelemente 44.1 - 44.6 erfassen damit eindeutig jeden beliebigen Polarisationszustand $\Pi 1, \Pi 2...\Pi 6$ auf der Poincaré-Kugel. In jeder Achsrichtung X', Y', Z' werden entsprechende Signale gebildet:

X': S1, S2
Y': S5, S6
Z': S3, S4

Über die Detektionseinheit 40 der erfindungsgemäßen optischen Positionsmesseinrichtung kann somit jeder beliebige Polarisationszustand im resultierenden Strahlenbündel eindeutig in den drei Raumrichtungen der Poincaré-Kugel detektiert werden. Die vollständige Erfassung jedes beliebigen Polarisationszustandes im resultierenden Strahlenbündel ist gewährleistet. Hierzu umfasst die Detektionseinheit 40 mindestens drei Detektorelemente, wobei die mindestens drei Detektorelemente zwei lineare und einen zirkularen Polarisationszustand detektieren und wobei die beiden linearen Polarisationszustände nicht orthogonal zueinander orientiert sind.

Im Gegensatz dazu werden in Positionsmesseinrichtungen gemäß dem Stand der Technik nur Polarisationszustände erzeugt und durch optoelektronische Detektorelemente eindeutig erfasst, die auf einem festen Großkreises G liegen. Die Polarisationszustände, die den Detektorelementen zugeordnet sind, befinden sich entsprechend auf diesem Großkreis. Polarisationszustände zu beiden Seiten der Großkreisebene werden nicht durch eigene Detektorelemente erfasst und können deshalb auch nicht eindeutig unterschieden werden. Dies gilt insbesondere für die beiden erzeugenden Polarisationszustände $\Pi_{-1}$ und $\Pi_{+1}$. Gemäß dem Stand der Technik wird nur ein zweidimensionaler Polarisationszustand in der Ebene des Großkreises G detektiert, während die Detektionseinheit 40 der erfindungsgemäßen Positionsmesseinrichtung einen dreidimensionalen Polarisationszustand erfasst.

Die Detektionseinheit 40 erzeugt dazu 6 Abtastsignale, da neben den AC-Signalanteilen auch DC-Signalanteile mit erfasst und diese durch Differenzbildung eliminiert werden müssen. Hierbei ist zu beachten, dass die Signalpaare S1, S2 und S3, S4 und S5, S6 jeweils sog. Gegentaktsignale liefern, da sie diametral gegenüberliegende Polarisationszustände in der Poincare-Darstellung detektieren. Die AC-Signale $S_X$, $S_Y$ und $S_Z$, die den Achsen X', Y', Z' der Poincare-Kugel zugeordnet sind, werden daher gebildet durch:

$$S_X = S1 - S2 \qquad \text{(Gl. 6.1)}$$

$$S_Y = S5 - S6 \qquad \text{(Gl. 6.2)}$$

$$S_Z = S3 - S4 \qquad \text{(Gl. 6.3)}$$

Die nachfolgende Signalauswertung hat zum Ziel, die Winkellagen $\alpha$ und $\beta$ zu bestimmen. Aus einer geometrischen Auswertung der Poincaré-Darstellung ergeben sich die nachfolgenden Beziehungen:

$$\beta = arctan2(S_Z, S_\alpha) \qquad \text{(Gl. 7)}$$

mit

$$S_\alpha = S_X \cdot \cos(\alpha) + S_Y \cdot \sin(\alpha) \qquad \text{(Gl. 8)}$$

und

$$\alpha = arctan2(S_Y, S_X) + m \cdot \pi \qquad \text{(Gl. 9)}$$

Die Variable m kann in Gleichung 9 dabei den Wert 0 oder 1 einnehmen. Da sich bei einem Wechsel des Wertes von m das Vorzeichen von $S_\alpha$ verändert und damit die Messrichtung der erfindungsgemäßen optischen Positionsmesseinrichtung invertiert wird, ist es vorteilhaft, Gleichung 9 nur bei der Initialisierung zu verwenden. Der Grund dieser Zweideutigkeit liegt daran, dass normalerweise nicht bekannt ist, auf welcher Seite des Großkreises G (lokale Polarisationszustandsebene) der Polarisationszustand $\Pi_{+1}$ liegt. Ein Austausch der beiden Polarisationszustände $\Pi_{-1}$ und $\Pi_{+1}$, wie er nach einer Verschiebung um den Verschiebebetrag $X_A$ vorliegt, ergibt denselben Großkreis G.
Aus der derart bestimmten Winkellage $\beta$ kann schließlich die Feinposition $\xi$ der erfindungsgemäßen optischen Positionsmesseinrichtung bestimmt werden:

$$\xi = \frac{SP}{2\pi} \cdot \beta + N \cdot SP \qquad \text{(Gl. 10)}$$

Hierbei bezeichnet N den Wert eines Inkrementalzählers und zählt in bekannter Weise die Zahl der durchlaufenen Signalperioden. Mit Hilfe der Feinposition $\xi$ kann wiederum die Winkellage $\alpha$ analog zur Gleichung 4 bestimmt werden:

$$\alpha = \pi \cdot \frac{\xi}{X_A} - \frac{\pi}{2} \qquad \text{(Gl. 11)}$$

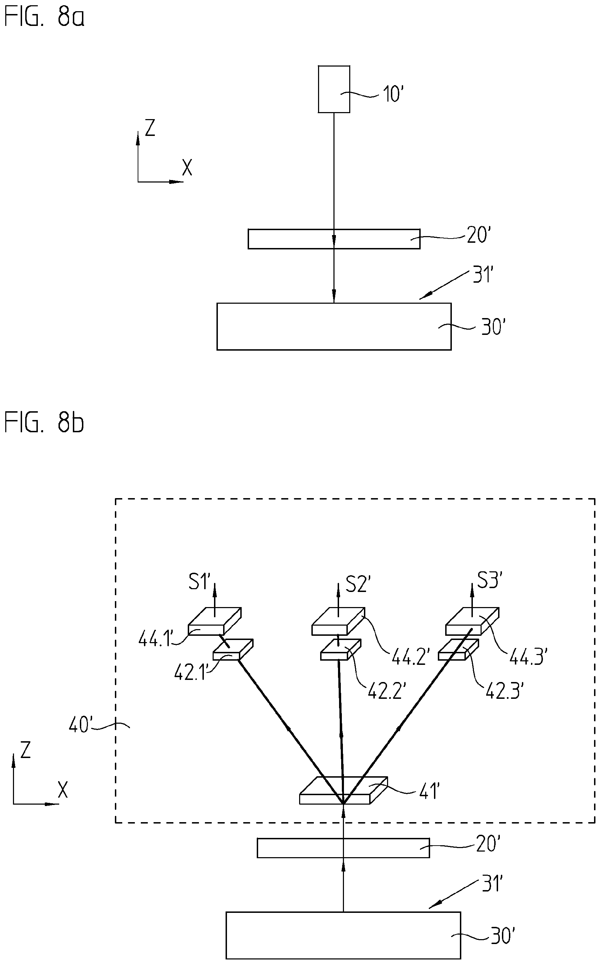

Nach der Initialisierung ist es vorteilhaft, die Winkellage $\alpha$ gemäß Gleichung 11 anstelle mit Gleichung 9 zu berechnen, da Gleichung 11 eindeutige Werte liefert. Dies verhindert jedoch nicht, dass bei der Initialisierung die Messrichtung nicht eindeutig festgelegt ist und von der Wahl des Parameters m abhängt.
Eine eindeutige Wahl des Wertes m bei der Initialisierung kann auf verschiedene Weise sichergestellt werden. Zum einen können während der Initialisierung kleine positive (oder negative) Positionsverschiebungen mit Hilfe des zugehörigen Aktuators erzeugt und durch die erfindungsgemäße optische Positionsmesseinrichtung gemessen werden. Aus der Änderung der Positionswerte kann m so bestimmt werden, dass die Messrichtung entsprechend positiv (oder negativ) ausfällt. Bei positiver Messrichtung muss beispielsweise nach den Gleichungen 7 - 9 $S_\alpha$ für $S_Z < 0$ zunehmen und für $S_Z > 0$ abnehmen. Wie oben erwähnt wird das Vorzeichen von $S_\alpha$ durch die Wahl von m festgelegt.
Alternativ können auch zusätzliche Signale zur Bestimmung der Winkellage $\alpha$ erzeugt werden. Gemäß der dargestellten Variante des ersten Ausführungsbeispiels in Figur 8a (Strahlengang bis zum Maßstab 30') und Figur 8b (Strahlengang ab dem Maßstab 30') kann beispielsweise ein unpolarisiertes oder zirkularpolarisiertes Lichtbündel einer Lichtquelle 10' auf den Maßstab 30' mit dem oben beschriebenen Maßstabsgitter 31' gelenkt werden. Das vom - nicht dargestellten - Reflektor linear polarisierte und in 0. Beugungsordnung zurücklaufende Lichtbündel gelangt auf eine Detektionseinheit 40'. In dieser wird das Lichtbündel durch ein Aufspaltgitter 41' in drei Detektionsstrahlenbündel aufgespalten und nach Transmission durch die Polarisatoren 42.1' - 42.3' durch optoelektronische Detektorelemente 44.1'-44.3' detektiert. Die Polarisationsachsen der Polarisatoren 42.1' - 42.3' stehen in einem Winkel von je 60° zueinander. Die abgeleiteten Signale S1', S2' und S3' stellen Inkrementalsignale mit einer gegenseitigen Phasenverschiebung von 120° und einer Signalperiode von $2 \cdot X_A$ dar, was der Polarisationsperiode des Maßstabs 30' entspricht. Daraus lässt sich in bekannter Weise eine Inkrementalposition $\xi'$ bestimmen, so dass mit Hilfe von Gleichung 11 die Winkellage $\alpha$ eindeutig berechnet werden kann.

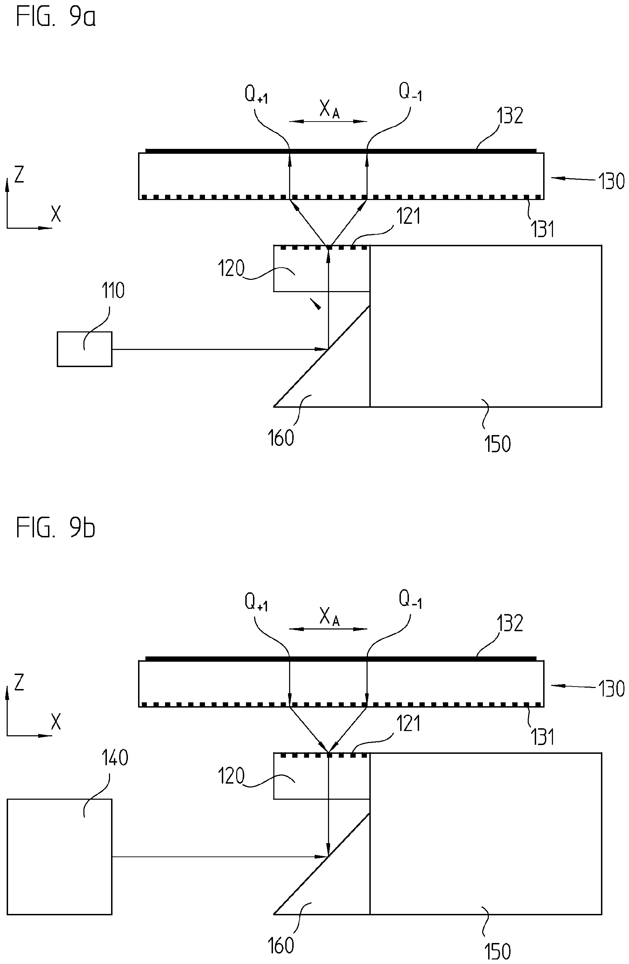

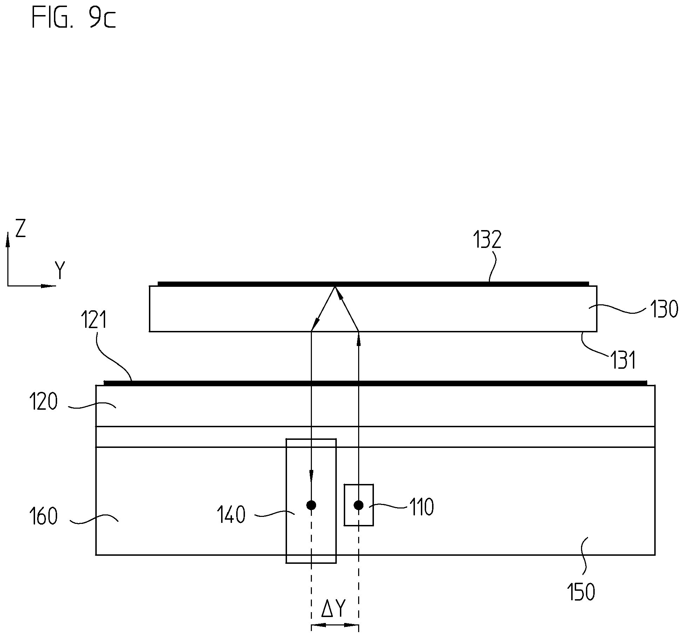

Ein zweites Ausführungsbeispiel der erfindungsgemäßen optischen Positionsmesseinrichtung wird nachfolgend anhand der Figuren 9a - 9c, 10a, 10b und 11 erläutert. Hierbei werden die erfindungsgemäßen Prinzipien in einer Positionsmesseinrichtung genutzt, wie sie z.B. in der WO 2008/138501 A1 oder in der WO 2008/138502 A1 der Anmelderin vorgeschlagen wurde. Der besondere Vorteil derartiger Positionsmesseinrichtungen besteht darin, dass die XY-Position eines in X- und Y-Richtung verschiebbaren Tisches unter Einhaltung der Abbe-Bedingung besonders genau gemessen werden kann.

Gemäß den Strahlengangdarstellungen in den Figuren 9a - 9c besteht die entsprechende optische Positionsmesseinrichtung aus einem Maßstab 130, der ortsfest mit einem stationären Werkzeug (z.B. Mikroskop) verbunden ist und einem Abtaststab bzw. einer Abtastplatte 120, die an einer Seitenfläche eines Tisches 150 angebracht ist. An der Überlappfläche von Maßstab 130 und Abtastplatte 120 trifft ein unpolarisiertes oder zirkularpolarisiertes Strahlenbündel einer kollimierten Lichtquelle 110 ein, das durch einen Umlenkspiegel 160 an der Seitenfläche des Tisches 150 in die angegebene Z-Richtung umgelenkt wird. Das umgelenkte Strahlenbündel wird an einem ersten Gitter in Form eines Abtastgitters 121 an der Oberseite der Abtastplatte 120 in Teilstrahlenbündel -1. und +1. Beugungsordnung aufgespalten. Beide Teilstrahlenbündel treffen auf das Maßstabgitter 131 des Maßstabs 130, welches hier als Transmissionsphasengitter mit 180° Phasenhub ausgebildet ist. Die Struktur des Maßstabgitters 131 ist in Abb. 10b in einer Draufsicht auf den Maßstab 130 dargestellt. Das Maßstabgitter 131 besteht aus einer Überlagerung einer periodischen Gitterstruktur mit einer Teilungsrichtung entlang der X-Richtung und einer diffraktiven Zylinderlinse mit einer fokussierenden Wirkung in Y-Richtung. Die periodische Gitterstruktur bewirkt eine Zurücklenkung der in X-Richtung geneigten Teilstrahlenbündel, so dass sie sich nach der Beugung entlang der Z-Richtung (optische Achse) ausbreiten. Gleichzeitig aber fokussiert die diffraktive Zylinderlinse beide Teilstrahlenbündel in Y-Richtung, so dass sie auf der Rückseite des Maßstabs 130 ihren Fokus aufweisen. Dort werden sie von einem strukturierten Reflektor 132 reflektiert, der analog zum ersten Ausführungsbeispiel ausgeführt ist und die beiden Teilstrahlenbündel orthogonal zueinander linear polarisiert; auch im vorliegenden Beispiel fungiert somit ein Hochfrequenzgitter erfindungsgemäß als Polarisationsmittel im Strahlengang der beiden Teilstrahlenbündel. Die Polarisationsperiode des Reflektors 132 entspricht wiederum dem doppelten Wert des Abstand $X_A$ der Teilstrahlenbündel auf dem Maßstab 130 bzw. auf dem Maßstabgitter 131. Durch den Y-Versatz der Teilstrahlenbündel relativ zum Zentrum der diffraktiven Zylinderlinse treffen die beiden Teilstrahlenbündel in Y-Richtung um $\Delta Y$ versetzt wieder auf das Maßstabgitter 131. Dort werden sie wieder kollimiert und in X-Richtung so abgelenkt, dass sie durch das Abtastgitter 121 der Abtastplatte 120 überlagert werden und in -Z-Richtung austreten. Nach der Umlenkung am Umlenkspiegel 160 gelangen die Teilstrahlenbündel auf eine Detektionseinheit 140. Die Detektionseinheit 140 mit den sechs optoelektronischen Detektorelementen 144.1 - 144.6 erzeugt wie im ersten Ausführungsbeispiel sechs Abtastsignale S1 - S6, die den verschiedenen Polarisationszuständen $\Pi1$ - $\Pi6$ entsprechen:

$$144.1: \Pi1 = PX+$$

$$144.2: \Pi2 = PX-$$

$$144.3: \Pi3 = PY+$$

$$144.4: \Pi4 = PY-$$

$$144.5: \Pi5 = PZ+$$

144.6: Π6 = PZ-

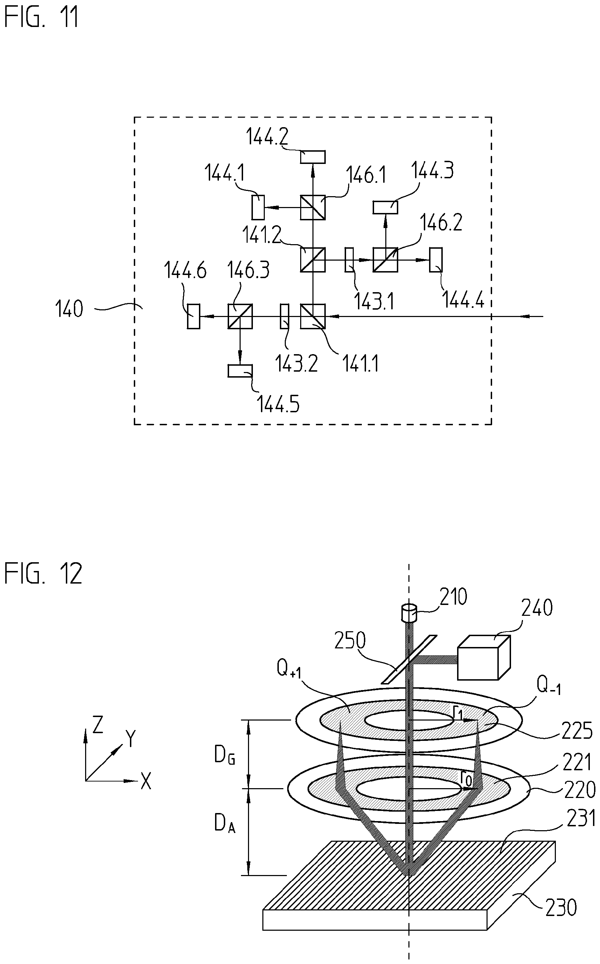

Allerdings werden in diesem Ausführungsbeispiel die sechs Detektionsstrahlenbündel in der Detektionseinheit 140 gemäß Figur 11 durch unpolarisierende Strahlteiler 141.1, 141.2 und polarisierende Strahlteiler 146.1, 146.2, 146.3 aufgespalten. Der polarisierende Strahlteiler 146.1 teilt die entsprechenden linearen Polarisationsanteile des einfallenden resultierenden Strahlenbündels auf die optoelektronischen Detektorelemente 144.1, 144.2 auf. Die $\lambda/2$-Verzögerungs-platte 143.1 dreht die einfallenden linearen Polarisationsanteile um 45°, sodass die Detektorelemente 144.3 und 144.4 entsprechend die um $\pm45°$ gedrehten Polarisationsanteile erfassen. Eine $\lambda/4$-Verzögerungsplatte 143.2 in Verbindung mit dem polarisierenden Strahlteiler 146.3 bewirkt, dass die Detektorelemente 144.5 und 144.6 zirkular polarisierte Lichtanteile des einfallenden resultierenden Strahlenbündels detektieren. Die Wirkung dieser Detektionseinheit 140 ist somit äquivalent zu derjenigen aus dem vorhergehenden Ausführungsbeispiel.

Die Signalauswertung erfolgt ebenfalls analog zum ersten Ausführungsbeispiel.

Der besondere Vorteil dieser erfindungsgemäßen Ausführung der optischen Positionsmesseinrichtung besteht darin, dass nur ein resultierendes Strahlenbündel zur Detektionseinheit 140 gelenkt werden muss und dieses durch die Polarisationskodierung erst in der Detektionseinheit 140 zu phasenverschobenen Detektionsstrahlenbündeln und entsprechenden Abtastsignalen S1 - S6 gewandelt werden kann. Bei bisherigen Abtastoptiken derartiger Positionsmesseinrichtungen musste entweder eine Abtasteinheit mit einer Bewegungsrichtung des Tischs mit bewegt werden oder es wurden durch die Gitter des Maßstabs und der Abtastplatte bereits mehrere resultierende Strahlenbündeln gebildet, die dann mit langen und präzisen Einzelspiegeln oder Ablenkgittern zur Detektionseinheit gelenkt werden mussten. Beides war mit sehr hohem Aufwand verbunden.

Darüber hinaus beeinflussen kleine Partikel in der Luftstrecke vom Umlenkspiegel 160 bis zur Detektionseinheit alle Abtastsignale S1 - S6 gleichermaßen, so dass die DC-Signalanteile (Gleichstrom-Signalanteile) durch die Differenzbildung nach Gl. 6 präzise eliminiert bleiben. Die Folge ist ein sehr kleiner Interpolationsfehler.

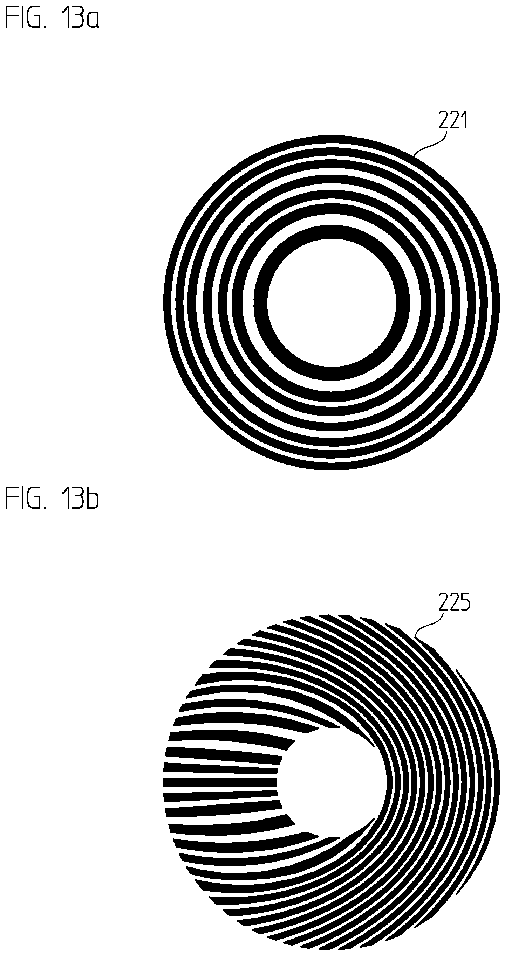

Ein drittes Ausführungsbeispiel der erfindungsgemäßen optischen Positionsmesseinrichtung ist in den Figuren 12, 13a, 13b dargestellt und wird nachfolgend erläutert. Wiederum wird lediglich auf die maßgeblichen Unterschiede zu den vorherigen Ausführungsbeispielen eingegangen.

Ein Maßstab 230 mit einem linearen Maßstabgitter 231 wird von einer nahezu rotationssymmetrischen Abtasteinheit abgetastet. Zur Abtasteinheit gehören hierbei die restlichen in Figur 12 dargestellten Komponenten, nämlich eine Lichtquelle 210, ein Strahlteiler 250, eine Abtastplatte 220 mit einem Abtastgitter 221 und einem Reflektor 225 sowie eine Detektionseinheit 240.

Durch die Rotationssymmetrie kann diese Abtastoptik bei jeder beliebigen Winkellage Rz (Rotation um die Z-Achse) der Abtasteinheit relativ zum Maßstabgitter 231 das Maßstabgitter 231 ohne resultierende Positionsfehler abtasten. Ein kollimiertes Lichtbündel einer unpolarisierten oder zirkular polarisierten Lichtquelle 210 wird senkrecht entlang der optischen Achse (-Z-Achse) auf ein erstes Gitter, nämlich das Maßstabgitter 231 des Maßstabs 230 gelenkt; in diesem Ausführungsbeispiel fungiert somit das Maßstabgitter 231 als erstes Gitter im Abtaststrahlengang, das eine Aufspaltung des von der Lichtquelle hereinfallenden Lichtbündels in zwei Teilstrahlenbündel bewirkt. Die vom Maßstabgitter in +1. und -1. Beugungsordnung gebeugten und reflektierten Teilstrahlenbündel beaufschlagen anschließend auf ein Abtastgitter 221. Das Abtastgitter 221 weist eine rotationssymmetrische Struktur auf, wie aus der Draufsicht in Figur 13a ersichtlich ist, und kann durch eine parabolische Gitterphase $\Phi_{AG}(x, y)$ beschrieben werden gemäß

$$\Phi_{AG}(x, y) = -\frac{\pi \cdot n_G}{\lambda \cdot D_G} \cdot (x^2 + y^2), \qquad (Gl.12)$$

wobei $D_G$ den Abstand in Z-Richtung zwischen dem Abtastgitter 221 und dem Reflektor 225 und $\lambda$ die Wellenlänge der Lichtquelle 210 bezeichnet; $n_G$ ist der Brechungsindex zwischen dem Abtastgitter 221 und dem Reflektor 225.

Der optimale Abstand $D_G$ zwischen dem Abtastgitter 221 und dem Reflektor 225 wird durch

$$D_G = \frac{n_G}{\sqrt{1-(\lambda/d_M)^2}} \cdot D_A \qquad (Gl.13)$$

bestimmt, wobei $D_A$ den Abstand in Z-Richtung zwischen dem Abtastgitter 221 und dem Maßstabgitter 231 bezeichnet.

Die parabolische Gitterphase $\Phi_{AG}(x,y)$ beschreibt eine besondere Linsenwirkung des Abtastgitters 221, die derart dimensioniert ist, dass die auftreffenden Teilstrahlenbündel parallel zur optischen Achse Z gelenkt werden und gleichzeitig eine Fokussierung auf den nachfolgenden Reflektor 225 stattfindet. Aufgrund der Rotationssymmetrie des Abtastgitters 221 bleibt diese Wirkung auch bei einer Rz-Drehung des Abtastgitters 221 bestehen. Der Reflektor 225 reflektiert die auftreffenden Teilstrahlenbündel derart, dass sie denselben Strahlenweg zurücklaufen, d.h. über den Reflektor 225 resultiert eine Rückreflexion in Richtung des Abtastgitters 221.

Beide Teilstrahlenbündel beaufschlagen dann erneut auf das Abtastgitter 221 und werden dort wieder kollimiert und in Teilungsrichtung des Maßstabgitters 231 abgelenkt. Durch die Beugung am Maßstabgitter 231 werden beide Teilstrahlenbündel zum resultierenden Strahlenbündel überlagert bzw. wiedervereinigt. Das resultierende Strahlenbündel läuft dann entlang der optischen Achse (Z-Achse) zurück zu einem Strahlteiler 250, der das resultierende Strahlenbündel einer Detektionseinheit 240 zuführt.

Die Polarisationskodierung der beiden Teilstrahlenbündel erfolgt in diesem Ausführungsbeispiel durch eine Ausbildung des Reflektors 225 als Hochfrequenzgitter, das in einer Draufsicht in Figur 13b dargestellt ist, und in Form eines strukturierten Metallfilms ausgebildet ist. Als Polarisationsmittel fungiert somit der als Hochfrequenzgitter ausgebildete Reflektor 225. Die vom Reflektor 225 reflektierten Teilstrahlenbündel werden jeweils entlang der lokalen Gitterstege linear polarisiert. Die Struktur des Reflektors 225 ist so ausgelegt, dass an gegenüberliegenden Stellen $Q_{-1}$ und $Q_{+1}$ die Gitterstege stets orthogonal zueinander stehen. Dadurch werden beide Teilstrahlenbündel immer zueinander orthogonal linear polarisiert. Als Polarisationsmittel fungiert demzufolge auch in diesem Ausführungsbeispiel ein geeignet ausgebildetes Hochfrequenzgitter. Die dem Hochfrequenzgitter zugrunde gelegte Gitterphase $\Phi_P(x,y)$ kann nach folgender Beziehung bestimmt werden:

$$\phi_P(x,y) = \frac{2\pi}{d_P} \cdot \left( r_1 + \sqrt{x^2 + y^2} \right) \cdot \sin\left(\frac{\arctan2(y,x)}{2}\right), \quad \text{(Gl. 14)}$$

wobei der Radius $r_1$ den radialen Auftreffort der beider Teilstrahlenbündel auf dem Hochfrequenzgitter bezeichnet und $d_P$ die lokale Gitterkonstante des Hochfrequenzgitters.

Die Detektionseinheit 240 kann wie in den vorhergehenden Ausführungsbeispielen ausgebildet sein, also etwa wie in den Figuren 5b oder 11 dargestellt, und liefert wieder sechs Signale S1 - S6, die den oben beschriebenen Polarisationszuständen $\Pi1$, $\Pi2...\Pi6$ entsprechen. Die Auswertung erfolgt wie im ersten Ausführungsbeispiel, wobei die Winkellage $\alpha$ den Rotationswinkel Rz der Abtasteinheit um die optische Achse (Z-Achse) bezeichnet.

Der besondere Vorteil der Abtastoptik dieser Ausführungsform der erfindungsgemäßen optischen Positionsmesseinrichtung liegt in dem uneingeschränkten Rotationswinkel Rz von Abtasteinheit und Maßstab, der meist als Moire-Winkel bezeichnet wird. Auch bei einer Verdrehung von Abtasteinheit und Maßstab um diesen Winkel resultieren keine Positionsfehler bei der Messung. Es hat sich zudem gezeigt, dass bei optimaler Auslegung der Gitterphase $\Phi_{AG}(x,y)$ auch die sonstigen Anbautoleranzen (Rx-, Ry-Kippung, z-Abtastabstand) äußerst groß sind.

Der Reflektor 225 bzw. das entsprechende Hochfrequenzgitter weist im vorhergehend erläuterten dritten Ausführungsbeispiel lokal die Wirkung eines linearen Polarisators auf. Er ist außerdem so gestaltet, dass im Abstand der beiden auftreffenden Teilstrahlenbündel diese lokalen linearen Polarisatoren orthogonal zueinander stehen. Die zunächst unpolarisiert oder zirkular polarisierten Teilstrahlenbündel werden dadurch zueinander orthogonal polarisiert, so dass die Detektionseinheit 240 Abtastsignale mit maximalem Kontrast liefert. Allerdings wird dabei die halbe Strahlleistung der Teilstrahlenbündel absorbiert und steht nicht zur Signalerzeugung zur Verfügung. Vorteilhafter ist es deshalb, in einer abgewandelten Variante des dritten Ausführungsbeispiels der erfindungsgemäßen optischen Positionsmesseinrichtung eine zirkular polarisierte Lichtquelle vorzusehen und die Hochfrequenz-Gitterstruktur des Reflektors so zu wählen, dass das Hochfrequenzgitter auf die darauf einfallenden Teilstrahlenbündel lokal wie eine Verzögerungsplatte, nämlich wie eine $\lambda/4$-Verzögerungsplatte wirkt, deren Hauptachse durch die Gitterstege bestimmt ist. Dadurch werden die einfallenden zirkular polarisierten Teilstrahlenbündel in reflektierte linear polarisierte Teilstrahlenbündel mit nur geringen Verlusten in der Strahlleistung umgewandelt. Die lineare Polarisation steht dabei je nach Vorzeichen der Verzögerung unter einen Winkel von +45° oder -45° zu den Gitterstegen. Die Orthogonalität der beiden Teilstrahlenbündel wird wiederum dann erreicht, wenn an gegenüberliegenden Auftrefforten $Q_{-1}$ und $Q_{+1}$ die Gitterstege senkrecht zueinander stehen. Die Gitterstege verlaufen daher wiederum entsprechend dem Ausführungsbeispiel in Figur 13b. Nur die lokale Gitterkonstante des Hochfrequenzgitters, sowie die Steghöhen und -breiten und die verwendeten Gittermaterialien, vorzugsweise hochbrechende Schichten, müssen geeignet angepasst werden. Über die Polarisationsperiode $P_P = 2 \cdot X_A$ verdrehen sich die Gitterstege bzw. die lokale Gitterorientierung kontinuierlich um 180°.

In einer weiteren vorteilhaften Variante des dritten Ausführungsbeispiels der erfindungsgemäßen optischen Positionsmesseinrichtung wird eine linear polarisierte Lichtquelle vorgesehen und das Hochfrequenzgitter des Reflektors derart ausgebildet, dass sie lokal wie eine $\lambda/2$-Verzögerungsplatte wirkt, deren Hauptachse wiederum durch die Gitterstege bestimmt ist. Dadurch wird die lineare Polarisationsrichtung des einfallenden, linear polarisierten Teilstrahlenbündels in der Polarisationsrichtung gedreht. Der Drehwinkel ist dabei gleich dem doppelten Wert des Drehwinkels zwischen der linearen Polarisationsrichtung des einfallenden Teilstrahlenbündels und der Orientierung der Gitterstege. An den Auftrefforten $Q_{-1}$ und $Q_{+1}$ müssen die Gitterstege jeweils unter einem Winkel von 45° zueinander stehen, damit die beiden austretenden Teilstrahlenbündel zueinander orthogonal polarisiert sind. Über die Polarisationsperiode $P_P = 2 \cdot X_A$

verdrehen sich die Gitterstege bzw. die lokale Gitterorientierung in diesem Fall kontinuierlich um nur 90°. Vorteilhaft ist es natürlich, die Gitterstege in den angrenzenden Polarisationsperioden kontinuierlich um jeweils weitere 90° zu verdrehen.

Die Auslegung der Detektionseinheit und die Auswertung der Signale sind für diese Variante identisch zu den obigen Ausführungsformen.

Neben den bislang konkret beschriebenen Ausführungsbeispielen gibt es im Rahmen der vorliegenden Erfindung selbstverständlich noch weitere Ausgestaltungsmöglichkeiten. Eine Reihe derartiger möglicher Abwandlungen sei nachfolgend angedeutet.

In den beschriebenen Ausführungsbeispielen der erfindungsgemäßen optischen Positionsmesseinrichtung variieren die Polarisationszustände $\Pi_{-1}$ und $\Pi_{+1}$ der beiden interferierenden Teilstrahlenbündel periodisch mit einer bestimmten Lageänderung des Maßstabs. Diese Lageänderung sei als polarisationssensitive Lageänderung bezeichnet und kann sowohl eine Verschiebung oder eine Verdrehung des jeweiligen Maßstabs sein. Die polarisationssensitive Lageänderung muss hierbei nicht mit einer Lageänderung entlang der jeweiligen Messrichtung übereinstimmen.

Im zweiten Ausführungsbeispiel der erfindungsgemäßen optischen Positionsmesseinrichtung kann die polarisationssensitive Lageänderung auch auf die Abtastplatte bezogen sein, wenn die Abtastplatte die polarisationsoptischen Hochfrequenzgitter trägt und wenn die beiden Teilstrahlenbündel im Strahlengangverlauf am Ort der Abtastplatte getrennt sind. Die Rolle von Abtastplatte und Maßstab sind in einer derartigen Variante vertauscht.

In den erläuterten Ausführungsbeispielen liegen die Polarisationszustände $\Pi_{-1}$ und $\Pi_{+1}$ stets auf dem Äquator der Poincaré-Kugel, d.h. auf dem Ort der linearen Polarisationszustände, und bewegen sich bei einer polarisationssensitiven Lageänderung des Maßstabs um den Äquator. Grundsätzlich ist es im Rahmen der vorliegenden Erfindung auch möglich, die Polarisation der Lichtquelle und/oder die lokale Verzögerungswirkung des Hochfrequenzgitter-Reflektors so zu wählen, dass die Polarisationszustände der Teilstrahlenbündel an einer beliebigen Stelle in der Poincare-Darstellung gegenüberliegen und sich bei einer polarisationssensitiven Lageänderung des Maßstabs auf einer beliebigen Trajektorie bewegen. Diese Trajektorie kann auch die Polarisationszustände +PZ und -PZ enthalten. Der Großkreis, d.h. die lokale Polarisationszustandsebene, steht - wie oben beschrieben - stets senkrecht zur Verbindungslinie der Polarisationszustände $\Pi_{-1}$ und $\Pi_{+1}$ und nimmt damit entsprechende Orientierungen ein. Durch die Detektionseinheit wird der Polarisationszustand des resultierenden Strahlenbündels eindeutig bestimmt. Die Auswertung der abgeleiteten Abtastsignale muss natürlich an die gewählte Trajektorie angepasst werden. Dazu beschreibt man die abgeleiteten Abtastsignale als Funktion des Polarisationszustandes des resultierenden Strahlenbündels und diesen wiederum als Funktion der verschiedenen Lageänderungen des Maßstabs und löst diese Gleichungen nach den gesuchten Lageänderungen als Funktion der gemessenen Abtastsignale analog zu den Gleichungen 7 - 9.

Der Polarisationszustand des resultierenden Strahlenbündels kann in der Poincare-Darstellung die gesamte Kugelfläche einnehmen, falls ausreichend große Lageänderungen des Maßstabs zugelassen sind. Die Detektionseinheit muss dazu eine ausreichende Zahl von Abtastsignalen bereitstellen. Zur Unterscheidung der drei Raumrichtungen der Poincare-Kugel sind mindestens drei Detektorelemente notwendig, denen Polarisationszustände zugeordnet sind, die in der Poincare-Darstellung nicht in einer Ebene liegen dürfen. Vorteilhafterweise sind zusätzliche Detektorelemente vorgesehen, die darüber hinaus auch die Abtrennung der DC-Signalanteile von den modulierten AC-Signalanteilen (Wechselstrom-Signalanteilen) ermöglichen. Im einfachsten Fall kann ein zusätzliches Detektorelement eingesetzt werden, dessen zugeordneter Polarisationszustand demjenigen eines anderen Detektorelements gegenüber liegt. Beide Detektorelemente liefern damit Gegentaktsignale, aus denen durch Summenbildung der DC-Signalanteil bestimmt werden kann. Dieser DC-Signalanteil wird dann von allen Abtastsignalen abgezogen, so dass nur die gewünschten AC-Signalanteile übrig bleiben und weiterverarbeitet werden. In einer optimalen Detektionseinheit werden aber sechs Abtastsignale entsprechend der oben beschriebenen Ausführungsbeispiele vorgesehen, so dass zu jeder Raumrichtung der Poincaré-Kugel jeweils ein Paar von Gegentaktsignalen erzeugt wird. Natürlich ist es grundsätzlich möglich, darüber hinaus noch Abtastsignale zu weiteren Polarisationszuständen zu generieren, um die Genauigkeit der Bestimmung des resultierenden Polarisationszustandes und damit die Genauigkeit der Interpolation zu erhöhen. Beispielsweise kann auch durch ein Detektorelement ohne vorgeschalteten Polarisator ein DC-Signal (Gleichstrom-Signal) erzeugt werden, das von den Signalen der anderen Detektorelemente entsprechend abgezogen wird.

Desweiteren ist es natürlich möglich, beim zweiten Ausführungsbeispiel statt dem Reflektor auch das Maßstabgitter polarisationsoptisch auszugestalten. Ein solche Ausbildung eines polarisationsoptischen Transmissionsgitters kann dadurch erhalten werden, indem zwei Varianten eines Hochfrequenzgitters auswählt werden, die jeweils einer $\lambda/4$-Verzögerungsplatte entsprechen und zueinander aber einen Phasenhub von 180° aufweisen. Diese beiden Varianten werden entsprechend der Struktur in Figur 10b abwechselnd angeordnet (schraffiert: Variante 1, nicht schraffiert: Variante 2), wobei über die Teilungsrichtung X hinweg die Orientierung des Hochfrequenzgitters so verändert wird, dass im Strahlabstand $X_A$ wieder orthogonale Polarisationen entstehen. Der Reflektor ist in diesem Fall als unstrukturierte Reflexionsschicht ausgebildet. In analoger Weise kann auch im dritten Ausführungsbeispiel das Abtastgitter 221 durch ein entsprechendes, polarisationsoptisches Transmissionsgitter ersetzt werden. Die oben beschriebenen beiden Varianten eines Hochfrequenzgitters werden gemäß der Struktur in Figur 13a angeordnet. Die Orientierung des Hochfrequenzgitters dreht sich dabei in azimutaler Richtung gemäß Figur 13b. Der Reflektor 225 ist in diesem Fall ebenfalls als unstrukturierte Reflexionsschicht ausgebildet. Allgemein kann die orthogonale Polarisation der beiden Teilstrahlenbündel an jeder beliebigen Stelle im Strahlengang der Positionsmesseinrichtung eingebracht werden, an der die beiden Teilstrahlenbündel örtlich getrennt sind.

Statt der Hochfrequenzgitter können auch andere polarisationsoptische Bauelemente wie z.B. Kunststoff-Verzögerungsplatten oder Kunststoff-Polarisatoren, Schichten mit metallischen Nanopartikeln verwendet werden, um die Polarisationszustände der beiden Teilstrahlenbündel zu beeinflussen. Die Ortsabhängigkeit der Polarisationseigenschaften kann durch eine entsprechende ortsabhängige Orientierung der polarisationsoptischen Elemente, wie z.B. Kunststoff-Moleküle bzw. Nanopartikel, herbeigeführt werden.

Da die Herstellung von Hochfrequenzgittern durch bestimmte Randbedingungen wie einheitliche Schichthöhen, Ätztiefen, Schichtmaterialien wesentlich vereinfacht werden kann, ist es oftmals vorteilhaft, die beiden Teilstrahlenbündel nicht genau orthogonal zueinander zu polarisieren, sondern gewisse Abweichungen von der Orthogonalität zuzulassen. Ausreichende Modulationsgrade der Abtastsignale sind auch noch für Polarisationszustände der beiden Teilstrahlenbündel gegeben, die in der Poincare-Darstellung im Bereich 90°-270° statt optimal 180° zueinander versetzt sind.

## Patentansprüche

1. Optische Positionsmesseinrichtung zur Erfassung der Relativposition eines Maßstabs (30; 30'; 130'; 230) und einer Abtastplatte (20; 20'; 120; 220), die relativ zueinander entlang mindestens einer Messrichtung (x) beweglich angeordnet sind,

   - wobei die optische Positionsmesseinrichtung derart ausgestaltet ist, dass ein von einer Lichtquelle (10; 10'; 110; 210) emittiertes Strahlenbündel durch ein erstes Gitter (21, 121, 231) eine Aufspaltung in mindestens zwei Teilstrahlenbündel erfährt, die Teilstrahlenbündel eine Wiedervereinigung zu einem resultierenden Strahlenbündel erfahren und aus dem resultierenden Strahlenbündel in einer Detektionseinheit (40; 40'; 140; 240) mehrere verschiebungsabhängige Abtastsignale erzeugbar sind,
   - wobei die optische Positionsmesseinrichtung den Maßstab (30, 30', 130, 230), die Abtastplatte (20,20', 120), die Detektionseinheit (40', 140, 240) und die Mittel zur Wiedervereinigung der beiden Teilstrahlenbündel umfasst,
   - sowie Polarisationsmittel (31, 32, 132, 225), die entlang der mindestens einen Messrichtung (x) in den Strahlengängen der Teilstrahlenbündel angeordnet sind, so dass nach Durchlaufen des ersten Gitters (21, 121, 231) und der Polarisationsmittel (31, 32, 132, 225) die Polarisationszustände ($\Pi$1,..., $\Pi$6) der Teilstrahlenbündel orthogonal zueinander orientiert sind und
   - die Wirkung der Polarisationsmittel auf den Polarisationszustand ($\Pi$1,..., $\Pi$6) des jeweiligen Teilstrahlenbündels in der mindestens einen Messrichtung (x) periodisch mit einer Polarisationsperiode ($P_P$) variiert, so dass jeweils ortsabhängig in ihrer Orientierung variierende lineare Polarisationszustände ($\Pi$1...., $\Pi$6) in den Teilstrahlenbündeln resultieren,
   - wobei die Polarisationsperiode ($P_P$) der Polarisationsmittel größer als die Teilungsperiode ($d_A$; $d_M$) des ersten Gitters ist.

2. Optische Positionsmesseinrichtung nach Anspruch 1, wobei die Detektionseinheit (40; 40'; 140; 240) dergestalt ausgebildet ist, dass darüber jeder beliebige Polarisationszustand ($\Pi$1,..., $\Pi$6) des resultierenden Strahlenbündels eindeutig in den drei Raumrichtungen der Poincare-Kugel detektierbar ist.

3. Optische Positionsmesseinrichtung nach mindestens einem der vorhergehenden Ansprüche, wobei die Detektionseinheit (40; 40'; 140; 240) mindestens drei Detektorelemente (44.1 - 44.6; 44.1' - 44.3'; 144.1 -144.6) umfasst und die mindestens drei Detektorelemente (44.1 - 44.6; 44.1' - 44.3'; 144.1 - 144.6) zwei lineare und einen zirkularen Polarisationszustand ($\Pi$1,..., $\Pi$6) detektieren und die beiden linearen Polarisationszustände ($\Pi$1, $\Pi$2, $\Pi$5, $\Pi$6) nicht orthogonal zueinander orientiert sind.

4. Optische Positionsmesseinrichtung nach mindestens einem der vorhergehenden Ansprüche, wobei die Polarisationsmittel derart ausgebildet sind, dass eine ortsabhängig variierende Polarisationswirkung auf die darauf einfallenden Teilstrahlenbündel über räumlich unterschiedlich orientierte Komponenten der Polarisationsmittel einstellbar ist.

5. Optische Positionsmesseinrichtung nach mindestens einem der Ansprüche 1 - 4, **dadurch gekennzeichnet, dass** die Polarisationsmittel als Hochfrequenzgitter ausgebildet sind, die auf die darauf einfallenden Teilstrahlenbündel lokal wie lineare Polarisatoren wirken.

**6.** Optische Positionsmesseinrichtung nach mindestens einem der Ansprüche 1 - 3, wobei die Polarisationsmittel als Hochfrequenzgitter ausgebildet sind, die auf die darauf einfallenden Teilstrahlenbündel lokal wie eine Verzögerungsplatte wirken.

**7.** Optische Positionsmesseinrichtung nach mindestens einem der vorhergehenden Ansprüche, wobei das von der Lichtquelle (10; 10'; 110) emittierte Strahlenbündel an dem ersten Gitter, das als Abtastgitter (21; 121) auf der Abtastplatte (20; 20'; 120) ausgebildet ist, eine Aufspaltung in zwei Teilstrahlenbündel erfährt, die Teilstrahlenbündel anschließend ein Maßstabgitter (31; 31'; 131) auf dem Maßstab (30; 30'; 130') beaufschlagen und daraufhin wieder in Richtung des Abtastgitters (21; 121) propagieren, wo die Teilstrahlenbündel zu einem resultierenden Strahlenbündel wiedervereinigt und der Detektionseinheit (40; 40'; 140) zugeführt werden und wobei der Maßstab (30; 30'; 130) als Reflexions-Maßstab ausgebildet ist, der eine strukturierte, dielektrische Schicht (33) und einen strukturierten Reflektor (32; 132) aufweist, die auf einem Substrat (34) aufgebracht sind und wobei als Polarisationsmittel der strukturierte Reflektor (32; 132) fungiert, welcher als polarisierendes Hochfrequenzgitter ausgebildet ist.

**8.** Optische Positionsmesseinrichtung nach mindestens einem der Ansprüche 1 - 6, wobei

- das von der Lichtquelle (210) emittierte Strahlenbündel an dem ersten Gitter, das als Maßstabgitter (231) auf dem Maßstab (230) ausgebildet ist, eine Aufspaltung in zwei Teilstrahlenbündel erfährt,
- die Teilstrahlenbündel anschließend ein Abtastgitter (221) auf der Abtastplatte (220) beaufschlagen und daraufhin in Richtung eines Reflektors (225) propagieren, wo eine Rückreflexion der Teilstrahlenbündel in Richtung des Abtastgitters (221) resultiert,
- die Teilstrahlenbündel nach dem erneuten Beaufschlagen des Abtastgitters (221) in Richtung des Maßstabgitters (231) propagieren, wo die Teilstrahlenbündel zu einem resultierenden Strahlenbündel wiedervereinigt und der Detektionseinheit (240) zugeführt werden und wobei als Polarisationsmittel der Reflektor (225) fungiert, der als Hochfrequenzgitter ausgebildet ist, dessen lokale Gitterorientierung sich über die Polarisationsperiode (Pp) kontinuierlich um 180° verdreht oder dessen lokale Gitterorientierung sich über die Polarisationsperiode ($P_P$) kontinuierlich um 90° verdreht.

**9.** Optische Positionsmesseinrichtung nach Anspruch 1, wobei der Maßstab (30; 30'; 130'; 230) ein Maßstabgitter (31; 31'; 131; 231) umfasst und für das Verhältnis der Polarisationsperiode (Pp) der Polarisationsmittel zur Teilungsperiode ($d_A$; $d_M$) des ersten Gitters gilt

$$P_P \, / \, d_A > 100$$

oder

$$P_P \, / \, d_M > 100,$$

mit

$P_P$ := Polarisationsperiode der Polarisationsmittel,
$d_A$ := Teilungsperiode des Abtastgitters,
$d_M$ := Teilungsperiode des Maßstabgitters.

**Claims**

**1.** Optical position measuring device for capturing the relative position of a measuring standard (30; 30'; 130'; 230) and a scanning plate (20; 20'; 120; 220), which are movably arranged relative to one another along at least one measurement direction (x),

- wherein the optical position measuring device is configured in such a way that a beam emitted by a light source (10; 10'; 110; 210) is divided into at least two partial beams by way of a first grating (21, 121, 231), the partial beams undergo a reunification to form a resultant beam and a plurality of displacement-dependent scanning signals are producible from the resultant beam in a detection unit (40; 40'; 140; 240),

- wherein the optical position measuring device comprises the measuring standard (30, 30', 130, 230), the scanning plate (20, 20', 120), the detection unit (40', 140, 240) and the means for reunifying the two partial beams,
- and polarization means (31, 32, 132, 225) which are arranged in the beam paths of the partial beams along the at least one measurement direction (x) in such a way that the polarization states ($\Pi 1$, ..., $\Pi 6$) of the partial beams are oriented orthogonal to one another after passing through the first grating (21, 121, 231) and the polarization means (31, 32, 132, 225), and
- the effect of the polarization means on the polarization state ($\Pi 1$, ..., $\Pi 6$) of the respective partial beam in the at least one measurement direction (x) varies periodically with a polarization period ($P_P$) such that linear polarization states ($\Pi 1$, ..., $\Pi 6$) that respectively vary in terms of their orientation in a spatially dependent manner result in the partial beams,
- wherein the polarization period (Pp) of the polarization means is greater than the grating period ($d_A$; $d_M$) of the first grating.

2. Optical position measuring device according to Claim 1, wherein the detection unit (40; 40'; 140; 240) is embodied in such a way that any desired polarization state ($\Pi 1$, ..., $\Pi 6$) of the resultant beam is uniquely detectable thereby in the three spatial directions of the Poincare sphere.

3. Optical position measuring device according to at least one of the preceding claims, wherein the detection unit (40; 40'; 140; 240) comprises at least three detector elements (44.1-44.6; 44.1'-44.3'; 144.1-144.6) and the at least three detector elements (44.1-44.6; 44.1'-44.3'; 144.1-144.6) detect two linear and one circular polarization state ($\Pi 1$, ..., $\Pi 6$) and the two linear polarization states ($\Pi 1$, $\Pi 2$, $\Pi 5$, $\Pi 6$) are not oriented orthogonal to one another.

4. Optical position measuring device according to at least one of the preceding claims, wherein the polarization means are embodied in such a way that a polarization effect on the partial beams incident thereon that varies in a spatially dependent manner is adjustable by way of components of the polarization means that are oriented differently in space.

5. Optical position measuring device according to at least one of Claims 1-4, **characterized in that** the polarization means are embodied as a high-frequency grating, said polarization means acting locally like linear polarizers on the partial beams incident thereon.

6. Optical position measuring device according to at least one of Claims 1-3, wherein the polarization means are embodied as a high-frequency grating, said polarization means acting locally like a retardation plate on the partial beams incident thereon.

7. Optical position measuring device according to at least one of the preceding claims, wherein the beam emitted by the light source (10; 10'; 110) is divided into two partial beams at the first grating, which is embodied as a scanning grating (21; 121) on the scanning plate (20; 20'; 120), the partial beams subsequently impinge on a measuring standard grating (31; 31'; 131) on the measuring standard (30; 30'; 130') and thereupon propagate, again, in the direction of the scanning grating (21; 121) where the partial beams are reunified to form a resultant beam and supplied to the detection unit (40; 40'; 140) and wherein the measuring standard (30; 30'; 130) is embodied as a reflection measuring standard that has a structured, dielectric layer (33) and a structured reflector (32; 132), which are applied to a substrate (34), and wherein the structured reflector (32; 132), which is embodied as a polarizing high-frequency grating, acts as a polarization means.

8. Optical position measuring device according to at least one of Claims 1-6, wherein

- the beam emitted by the light source (210) is divided into two partial beams at the first grating, which is embodied as a measuring standard grating (231) on the measuring standard (230),
- the partial beams subsequently impinge on a scanning grating (221) on the scanning plate (220) and thereupon propagate in the direction of a reflector (225) where a back reflection of the partial beams in the direction of the scanning grating (221) results,
- the partial beams, after the renewed impingement of the scanning grating (221), propagate in the direction of the measuring standard grating (231) where the partial beams are reunified to form a resultant beam and supplied to the detection unit (240) and wherein the reflector (225) which is embodied as a high-frequency grating, the local grating orientation of which rotates continuously through 180° over the polarization period ($P_P$) or the local grating orientation of which rotates continuously through 90° over the polarization period ($P_P$), acts as polarization means.

9. Optical position measuring device according to Claim 1, wherein the measuring standard (30; 30'; 130'; 230) comprises a measuring standard grating (31; 31'; 131; 231) and the following applies to the ratio of the polarization period ($P_P$) of the polarization means to the grating period ($d_A$; $d_M$) of the first grating:

$$P_P/d_A > 100$$

or

$$P_P/d_M > 100,$$

where

$P_P$:= polarization period of the polarization means,
$d_A$:= grating period of the scanning grating,
$d_M$:= grating period of the measuring standard grating.

**Revendications**

1. Dispositif optique de mesure de position destiné à détecter la position relative d'une échelle de mesure (30 ; 30' ; 130' ; 230) et d'une plaque de balayage (20 ; 20' ; 120 ; 220) qui sont disposées de manière mobile l'une par rapport à l'autre suivant au moins une direction de mesure (x),

   - dans lequel le dispositif optique de mesure de position est configuré de telle manière qu'un faisceau de rayonnement émis par une source lumineuse (10 ; 10' ; 110 ; 210) soit soumis à une division en au moins deux faisceaux de rayonnement partiels par un premier réseau (21, 121, 231), que les faisceaux de rayonnement partiels soient réunis pour former un faisceau de rayonnement résultant et que plusieurs signaux de balayage dépendants du déplacement puissent être générés à partir du faisceau de rayonnement résultant dans une unité de détection (40 ; 40' ; 140 ; 240),
   - dans lequel le dispositif optique de mesure de position comprend l'échelle de mesure (30, 30', 130, 230), la plaque de balayage (20, 20', 120), l'unité de détection (40', 140, 240) et les moyens de réunification des deux faisceaux de rayonnement partiels,
   - ainsi que des moyens de polarisation (31, 32, 132, 225) disposés suivant au moins une direction de mesure (x) sur les chemins de faisceau des faisceaux de rayonnement partiels, de manière à ce qu'après avoir traversé le premier réseau (21, 121, 231) et les moyens de polarisation (31, 32, 132, 225), les états de polarisation ($\pi1$, ..., $\pi6$) des faisceaux de rayonnement partiels soient orientés perpendiculairement les uns aux autres, et
   - l'effet des moyens de polarisation sur l'état de polarisation ($\pi1$, ..., $\pi6$) du faisceau de rayonnement partiel respectif varie périodiquement dans ladite au moins une direction de mesure (x) avec une période de polarisation ($P_P$), cela ayant pour résultat que les états de polarisation linéaires ($\pi1$, ..., $\pi6$) des faisceaux de rayonnement partiels subissent des variations d'orientation en fonction de la position,
   - dans lequel la période de polarisation ($P_P$) des moyens de polarisation est supérieure à la période de réseau ($d_A$ ; $d_M$) du premier réseau.

2. Dispositif optique de mesure de position selon la revendication 1, dans lequel l'unité de détection (40 ; 40' ; 140 ; 240) est réalisée de telle manière que tout état de polarisation ($\pi1$, ..., $\pi6$) du faisceau de rayonnement résultant puisse être détecté sans ambiguïté dans les trois directions spatiales de la sphère de Poincaré.

3. Dispositif optique de mesure de position selon au moins l'une des revendications précédentes, dans lequel l'unité de détection (40 ; 40' ; 140 ; 240) comprend au moins trois éléments détecteurs (44.1 - 44.6 ; 44.1' - 44.3' ; 144.1 - 144.6) et lesdits au moins trois éléments détecteurs (44.1 - 44.6 ; 44.1' - 44.3' ; 144.1 - 144.6) détectent deux états de polarisation linéaires et un état de polarisation circulaire ($\pi1$,...., $\pi6$) et les deux états de polarisation linéaires ($\pi1$, $\pi2$, $\pi5$, $\pi6$) ne sont pas orientés perpendiculairement l'un à l'autre.

4. Dispositif optique de mesure de position selon au moins l'une des revendications précédentes, dans lequel les moyens de polarisation sont conçus de telle manière qu'un effet de polarisation variant en fonction de la position

**EP 2 466 272 B1**

puisse être exercé sur les faisceaux de rayonnement partiels incidents sur ceux-ci, par l'intermédiaire de composants des moyens de polarisation qui sont orientés spatialement de manière différente.

5. Dispositif optique de mesure de position selon au moins l'une des revendications 1 à 4, **caractérisé en ce que** les moyens de polarisation sont réalisés sous la forme de réseaux à haute fréquence qui agissent localement en tant que polariseurs linéaires sur les faisceaux de rayonnement partiels incidents sur ceux-ci.

6. Dispositif optique de mesure de position selon au moins l'une des revendications 1 à 3, dans lequel les moyens de polarisation sont réalisés sous la forme de réseaux à haute fréquence qui agissent localement en tant que lame de retard sur les faisceaux de rayonnement partiels incidents sur ceux-ci.

7. Dispositif optique de mesure de position selon au moins l'une des revendications précédentes, dans lequel le faisceau de rayonnement émis par la source lumineuse (10 ; 10' ; 110) est soumis à une division en deux faisceaux partiels sur le premier réseau, qui est réalisé sous la forme d'un réseau de balayage (21 ; 121) sur la plaque de balayage (20 ; 20' ; 120, les faisceaux de rayonnement partiels sont ensuite incidents sur un réseau gradué (31 ; 31' ; 131) sur l'échelle de mesure (30 ; 30' ; 130') et de là, se propagent de nouveau dans la direction du réseau de balayage (21 ; 121), où les faisceaux de rayonnement partiels sont réunis pour former un faisceau de rayonnement résultant et transmis à l'unité de détection (40 ; 40' ; 140), et dans lequel l'échelle de mesure (30 ; 30' ; 130) est réalisée sous la forme d'une échelle de réflexion comportant une couche diélectrique structurée (33) et un réflecteur structuré (32 ; 132) qui sont déposés sur un substrat (34), et dans lequel le réflecteur structuré fonctionne en tant que réflecteur structuré (32 ; 132) qui est réalisé sous la forme d'un réseau polarisant à haute fréquence.

8. Dispositif optique de mesure de position selon au moins l'une des revendications 1 à 6, dans lequel

- le faisceau de rayonnement émis par la source lumineuse (210) est soumis à une division en deux faisceaux de rayonnement partiels sur le premier réseau, qui est réalisé sous la forme d'un réseau gradué (231) sur l'échelle de mesure (230),
- les faisceaux de rayonnement partiels sont ensuite incidents sur un réseau de balayage (221) sur la plaque de balayage (220) et de là, se propagent dans la direction d'un réflecteur (225), où il se produit une rétroréflexion des faisceaux de rayonnement partiels dans la direction du réseau de balayage (221),
- les faisceaux de rayonnement partiels se propagent dans la direction du réseau gradué (231) après avoir été de nouveau incidents sur le réseau de balayage (221), où les faisceaux de rayonnement partiels sont réunis pour former un faisceau résultant et transmis à l'unité de détection (240), et dans lequel le réflecteur (225) fonctionne en tant que moyen de polarisation, qui est réalisé sous la forme d'un réseau à haute fréquence dont l'orientation locale de réseau tourne en continu de 180° pendant la période de polarisation ($P_P$) ou dont l'orientation locale de réseau tourne en continu de 90° pendant la période de polarisation ($P_P$).

9. Dispositif optique de mesure de position selon la revendication 1, dans lequel l'échelle de mesure (30 ; 30' ; 130' ; 230) comprend un réseau gradué (31 ; 31' ; 131 ; 231) et le rapport de la période de polarisation ($P_P$) des moyens de polarisation à la période de réseau ($d_A$ ; $d_M$) du premier réseau est tel que

$$P_P \ / \ d_A > 100$$

ou

$$P_P \ / \ d_M > 100,$$

avec

$P_P$ =:période de polarisation des moyens de polarisation,
$d_A$ =: période de graduation du réseau de balayage,
$d_M$ = période de graduation du réseau gradué.

FIG. 1a

STAND DER TECHNIK

FIG. 1b

STAND DER TECHNIK

FIG. 2

STAND DER TECHNIK

FIG. 3a

STAND DER TECHNIK

FIG. 3b

STAND DER TECHNIK

FIG. 4

STAND DER TECHNIK

FIG. 5a

FIG. 5b

FIG. 6a

FIG. 6b

FIG. 7

FIG. 8a

FIG. 8b

FIG. 9a

FIG. 9b

FIG. 9c

FIG. 10a

Y
X

$Q_{+1}$    $X_A$    $Q_{-1}$    132    130

Flb. 10b

Y
X

$\Delta Y$    130

131

FIG. 11

FIG. 12

FIG. 13a

221

FIG. 13b

225

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2127483 A
- US 6914234 B
- US 2010110363 A1
- DE 102010063216
- WO 2008138501 A1
- WO 2008138502 A1

**In der Beschreibung aufgeführte Nicht-Patentliteratur**

- **M. BORN ; E. WOLF.** Principles of Optics. Cambridge University Press, 1999, 32, , 33